# EUROPEAN PATENT APPLICATION

(11) **EP 4 447 600 A1**
(43) Date of publication of application: **16.10.2024**
(21) Application number: 22914430.8
(22) Date of filing: 21.12.2022
(51) Int. Cl.: H04W 74/08

(54) **COMMUNICATION METHOD AND COMMUNICATION APPARATUS**

(30) Priority: 29.12.2021 CN 202111644648
(71) Applicant: Huawei Technologies Co., Ltd., Shenzhen, Guangdong 518129 (CN)
(72) Inventor: LUO, Hejia, Shenzhen, Guangdong 518129 (CN); WANG, Xiaolu, Shenzhen, Guangdong 518129 (CN); MENG, Xian, Shenzhen, Guangdong 518129 (CN); WANG, Yu, Shenzhen, Guangdong 518129 (CN); WANG, Jun, Shenzhen, Guangdong 518129 (CN); LI, Rong, Shenzhen, Guangdong 518129 (CN)
(74) Representative: Maiwald GmbH
(86) International application number: PCT/CN2022/140557
(87) International publication number: WO 2023/125176

(57) **Abstract**

This application provides a communication method and a communication apparatus, to reduce occurrence of a random access failure when a signal coverage area corresponding to a broadcast signal sent by a network device may change, to improve stability of a communication system. In the method, a terminal device obtains first information. The first information is used to determine an access range corresponding to a first signal. If the terminal device is located in the access range after a first moment, the terminal device sends a first random access preamble. The first random access preamble is associated with the first signal.

## Description

This application claims priority to Chinese Patent Application No. 202111644648.9, filed with the China National Intellectual Property Administration on December 29, 2021 and entitled "COMMUNICATION METHOD AND COMMUNICATION APPARATUS", which is incorporated herein by reference in its entirety.

### TECHNICAL FIELD

This application relates to the field of wireless technologies, and in particular, to a communication method and a communication apparatus.

### BACKGROUND

A random access procedure is generally initialized before a terminal device sends a random access preamble (random access preamble, preamble for short) to start to attempt to access a network device and the terminal device establishes a basic signaling connection with the network device.

Currently, the network device may send a broadcast signal, so that the terminal device sends a random access preamble to the network device based on the broadcast signal, to perform a random access procedure. Generally, an example in which the network device is a ground base station is used. Because the ground base station is fixed at a specific place on the ground, broadcast signals sent by the ground base station at different moments are stable signals. In other words, signal coverage areas corresponding to the broadcast signals are generally fixed at different moments. For the terminal device, when a received broadcast signal is good (for example, signal strength and/or signal quality is higher than a threshold), the terminal device determines to access a corresponding network device based on the broadcast signal.

However, in a future communication network, a network device may no longer be fixed at a specific place on the ground. For example, the network device may be a device such as a satellite, an airplane, or an uncrewed aerial vehicle. In this case, due to movement (or vibration, jitter, or the like) of the network device, a signal coverage area corresponding to a broadcast signal sent by the network device may change at different moments. As a result, when the terminal device determines, at a previous moment, that a received broadcast signal is good, a broadcast signal received at a next moment may not be suitable for initiating access, and consequently a random access procedure failure is likely to occur.

Therefore, how to reduce occurrence of a random access failure is an urgent technical problem to be resolved.

### SUMMARY

This application provides a communication method and a communication apparatus, to reduce occurrence of a random access failure when a signal coverage area corresponding to a broadcast signal sent by a network device may change, so as to improve stability of a communication system.

A first aspect of this application provides a communication method. The method is performed by a terminal device, or the method is performed by some components (for example, a processor, a chip, or a chip system) in a terminal device, or the method may be implemented by a logic module or software that can implement all or some functions of a terminal device. In the first aspect and a possible implementation of the first aspect, an example in which the communication method is performed by a terminal device is described. In the method, the terminal device obtains first information. The first information is used to determine an access range corresponding to a first signal. If the terminal device is located in the access range after a first moment, the terminal device sends a first random access preamble. The first random access preamble is associated with the first signal.

Based on the foregoing technical solution, the first information obtained by the terminal device is used to determine the access range corresponding to the first signal, and the terminal device may determine, based on the first information, whether the terminal device is located in the access range after the first moment. When the terminal device determines that the terminal device is located in the access range after the first moment, the terminal device sends the first random access preamble associated with the first signal, to perform a random access procedure. In other words, the terminal device sends the first random access preamble associated with the first signal only when the terminal device determines, in the random access procedure, that the terminal device is located in an access region of the first signal. Therefore, occurrence of a random access failure is reduced when a signal coverage area corresponding to a broadcast signal sent by a network device may change, so as to improve stability of a communication system.

In any embodiment of this application, the access range may also be expressed as: an accessible range, a range in which random access can be initiated, a coverage range, a spatial range, a geographical range, a signal (or beam) coverage range, an effective range of a signal (or beam), a stable coverage range of a signal (or beam), an access area, a spatial area, a geographical area, an accessible area, an area in which random access can be initiated, a coverage area, a coverage area of a signal (or beam), an effective area of a signal (or beam), a stable coverage area of a signal (or a beam), or the like.

In a possible implementation of the first aspect, the first moment may be determined based on a second moment and a duration threshold. In other words, in time domain, the first moment is in a duration threshold after the second moment.

Optionally, the second moment may be a moment at which the terminal device sends the random access preamble, a receiving moment of the first information, a sending moment of the first information (for example, a timestamp carried in the first information), any moment between the sending moment of the first information and the receiving moment of the first information, a moment of preset duration before the receiving moment of the first information, a moment of preset duration after the receiving moment of the first information, a moment of preset duration before the sending moment of the first information, a moment of preset duration after the sending moment of the first information, or the like.

Optionally, the duration threshold is configured by the network device (for example, the first information includes the duration threshold) or preconfigured in the terminal device.

In a possible implementation of the first aspect, the first moment may be a receiving moment that is estimated by the terminal device and that is of information involved in a random access procedure, a sending moment that is estimated by the terminal device and that is of information involved in a random access procedure, a moment, estimated by the terminal device, at which registration is completed on a core network device, a receiving moment that is estimated by the network device and that is of information involved in a random access procedure, a sending moment that is estimated by the network device and that is of information involved in a random access procedure, a moment that is estimated by the network device and at which the terminal device completes registration on a core network device, or the like.

Optionally, the information involved in the random access procedure includes a message 1 (MSG 1), a message 2 (MSG 2), a message 3 (MSG 3), a message 4 (MSG 4), and the like.

In a possible implementation of the first aspect, the first information includes at least one of the following: location information of the access range, movement information of the access range, a duration threshold between the first moment and the sending moment of the first information, a duration threshold between the first moment and the receiving moment of the first information, or the first moment.

Based on the foregoing technical solution, the first information that is sent by the network device and that is used to determine the access range corresponding to the first signal may be implemented in one of or a combination of the foregoing plurality of manners, to improve flexibility of the solution.

Optionally, the location information of the access range may include at least one of the following: location information of one or more reference points, a distance threshold between the location information and the one or more reference points, coordinates of the access range relative to the network device, coordinates of the access range relative to the ground (for example, coordinates of an earth-fixed system), or coordinates of the access range relative to the earth (for example, coordinates of an earth-centered inertial system). Further, optionally, when the first information includes the location information of the plurality of reference points and the distance threshold between the location information and the plurality of reference points, the access range (or referred to as coverage information) may be a union set of accessible regions described by each reference point and a corresponding distance threshold.

Optionally, the first moment is preconfigured in the terminal device.

Optionally, the terminal device obtains the first moment by using other information that is sent by the network device and that is different from the first information.

In a possible implementation of the first aspect, the first information includes identification information of a second signal, and a coverage area of the first signal overlaps a coverage area of the second signal. If it is detected that signal quality of the second signal is greater than a first threshold, the terminal device determines that the terminal device is located in the access range after the first moment.

Based on the foregoing technical solution, a signal coverage area of a broadcast signal sent by the network device may change due to movement of the network device. For the coverage area of the first signal, the coverage area of the second signal is located in a movement direction of the network device. Due to movement of the network device, the coverage area of the first signal is close to the coverage area of the second signal, and moves to the coverage area of the second signal. In other words, the coverage area of the first signal overlaps the coverage area of the second signal. Therefore, based on the identification information of the second signal included in the first information, when it is detected that the signal quality of the second signal is greater than the first threshold, the terminal device may determine that the terminal device is close to the coverage area of the second signal, that is, the terminal device may determine that the terminal device is located in the access range corresponding to the first signal after the first moment.

Optionally, the identification information of the second signal may also be expressed as index information of the second signal.

Optionally, if it is detected that the signal quality of the second signal is equal to the first threshold, the terminal device determines that the terminal device is located in the access range after the first moment. Alternatively, if it is detected that the signal quality of the second signal is equal to the first threshold, the terminal device determines that the terminal device is not located in the access range after the first moment.

In any embodiment of this application, the signal quality may include one or more of reference signal received power (reference signal received power, RSRP), reference signal received quality (reference signal received quality, RSRQ), or another parameter used to represent signal quality.

In a possible implementation of the first aspect, the first information includes identification information of a third signal, and the coverage area of the first signal does not overlap a coverage area of the third signal. If it is detected that signal quality of the third signal is less than a second threshold, the terminal device determines that the terminal device is located in the access range after the first moment.

Based on the foregoing technical solution, a signal coverage area of a broadcast signal sent by the network device may change due to movement of the network device. For the coverage area of the first signal, the coverage area of the third signal is located in a direction opposite to a movement direction of the network device. Due to movement of the network device, the coverage area of the first signal is far away from the coverage area of the second signal. In other words, the coverage area of the first signal does not overlap the coverage area of the third signal. Therefore, based on the identification information of the third signal included in the first information, when it is detected that the signal quality of the third signal is less than the second threshold, the terminal device may determine that the terminal device is far away from the coverage area of the third signal, that is, the terminal device may determine that the terminal device is located in the access range corresponding to the first signal after the first moment.

Optionally, the identification information of the third signal may also be expressed as index information of the third signal.

Optionally, if it is detected that the signal quality of the third signal is equal to the second threshold, the terminal device determines that the terminal device is located in the access range after the first moment; or if it is detected that the signal quality of the third signal is equal to the second threshold, the terminal device determines that the terminal device is not located in the access range after the first moment.

Optionally, the first threshold is greater than the second threshold, or the first threshold is equal to the second threshold.

Optionally, the first threshold, the second threshold, and a third threshold and/or a fourth threshold (and another threshold that may exist) mentioned below in embodiments of this application may all be preconfigured in the terminal device.

In a possible implementation of the first aspect, the first information includes the identification information of the second signal and the identification information of the third signal, the coverage area of the first signal overlaps the coverage area of the second signal, and the coverage area of the third signal does not overlap the coverage area of the first signal. If it is detected that the signal quality of the second signal is less than the third threshold and the signal quality of the third signal is less than the fourth threshold, the terminal device determines that the terminal device is located in the access range after the first moment.

Based on the foregoing technical solution, a signal coverage area of a broadcast signal sent by the network device may change due to movement of the network device. For the coverage area of the first signal, the coverage area of the second signal is located in a movement direction of the network device, and the coverage area of the third signal is located in a direction opposite to the movement direction of the network device. Due to movement of the network device, the coverage area of the first signal is close to the coverage area of the second signal, and moves to the coverage area of the second signal, and the coverage area of the first signal is far away from the coverage area of the second signal. In other words, the coverage area of the first signal overlaps the coverage area of the second signal, and the coverage area of the first signal does not overlap the coverage area of the third signal. Therefore, based on the identification information of the second signal and the identification information of the third signal included in the first information, when it is detected that the signal quality of the second signal is less than the third threshold and the signal quality of the third signal is less than the fourth threshold, the terminal device may determine that a location of the terminal device is not close to the coverage area of the second signal nor the coverage area of the third signal. In other words, the terminal device determines that the location of the terminal device is located in a center area close to the coverage area of the first signal, that is, the terminal device may determine that the terminal device is located in the access range corresponding to the first signal after the first moment.

Optionally, if it is detected that the signal quality of the second signal is equal to the third threshold and that the signal quality of the third signal is equal to the fourth threshold, the terminal device determines that the terminal device is located in the access range after the first moment.

Optionally, a value relationship between the third threshold and the fourth threshold is not limited in this application. For example, the third threshold may be greater than the fourth threshold, the third threshold may be equal to the fourth threshold, or the third threshold may be less than the fourth threshold.

In a possible implementation of the first aspect, the first random access preamble includes a random access preamble corresponding to the first signal.

Based on the foregoing technical solution, the first random access preamble includes the random access preamble corresponding to the first signal. To be specific, when the terminal device determines that the terminal device is located in the access range corresponding to the first signal after the first moment, the terminal device sends the random access preamble corresponding to the first signal, so that the terminal device performs a random access procedure based on the first signal.

In a possible implementation of the first aspect, before the terminal device sends the first random access preamble, the method further includes: The terminal device receives first indication information. The first indication information indicates that the access range corresponding to the first signal includes at least two sub-ranges. The terminal device determines, based on the first indication information, that the terminal device is located in a target sub-range in the at least two sub-ranges.

Based on the foregoing technical solution, the first indication information received by the terminal device indicates that the access range corresponding to the first signal includes the at least two sub-ranges. When the terminal device sends the random access preamble corresponding to the first signal, if the access range corresponding to the first signal includes the at least two sub-ranges, the terminal device may determine, based on the first indication information, that the terminal device is located in the target sub-range in the at least two sub-ranges. In other words, the access range corresponding to the first signal may be divided into the at least two sub-ranges, so that the terminal device determines, based on the first indication information, a location of the terminal device in the at least two sub-ranges.

Optionally, the at least two sub-ranges may also be expressed as at least two sub-areas.

A second aspect of this application provides a communication method. The method is performed by a network device, or the method is performed by some components (for example, a processor, a chip, or a chip system) in a network device, or the method may be implemented by a logic module or software that can implement all or some functions of a network device. In the second aspect and a possible implementation of the second aspect, an example in which the communication method is performed by a network device is described. In the method, the network device generates first information. The first information is used to determine an access range corresponding to a first signal. The network device sends the first information. If a terminal device is located in the access range after a first moment, the network device receives a first random access preamble. The first random access preamble is associated with the first signal.

Based on the foregoing technical solution, the first information sent by the network device is used to determine an access range corresponding to the first signal, so that after the terminal device receives the first information, the terminal device may determine, based on the first information, whether the terminal device is located in the access range after the first moment. When the terminal device determines that the terminal device is located in the access range after the first moment, the terminal device sends the first random access preamble associated with the first signal, to perform a random access procedure. In other words, the terminal device sends the first random access preamble associated with the first signal only when the terminal device determines, in a random access procedure, that the terminal device is located in an access region of the first signal. Therefore, occurrence of a random access failure is reduced when a signal coverage area corresponding to a broadcast signal sent by the network device may change, so as to improve stability of a communication system.

In a possible implementation of the second aspect, the first information includes at least one of the following: location information of the access range, movement information of the access range, a duration threshold between the first moment and a sending moment of the first information, a duration threshold between the first moment and a receiving moment of the first information, or the first moment.

Based on the foregoing technical solution, the first information that is sent by the network device and that is used to determine the access range corresponding to the first signal may be implemented in one of or a combination of the foregoing plurality of manners, to improve flexibility of the solution.

Optionally, the location information of the access range may include at least one of the following: location information of one or more reference points, a distance threshold between the location information and the one or more reference points, coordinates of the access range relative to the network device, coordinates of the access range relative to the ground (for example, coordinates of an earth-fixed system), or coordinates of the access range relative to the earth (for example, coordinates of an earth-centered inertial system). Further, optionally, when the first information includes the location information of the plurality of reference points and the distance threshold between the location information and the plurality of reference points, the access range (or referred to as coverage information) may be a union set of accessible regions described by each reference point and a corresponding distance threshold.

In a possible implementation of the second aspect, the first information includes identification information of a second signal, and a coverage area of the first signal overlaps a coverage area of the second signal.

Based on the foregoing technical solution, a signal coverage area of a broadcast signal sent by the network device may change due to movement of the network device. For the coverage area of the first signal, the coverage area of the second signal is located in a movement direction of the network device. Due to movement of the network device, the coverage area of the first signal is close to the coverage area of the second signal, and moves to the coverage area of the second signal. In other words, the coverage area of the first signal overlaps the coverage area of the second signal. Therefore, based on the identification information of the second signal included in the first information sent by the network device, the terminal device may determine, when it is detected that signal quality of the second signal is greater than a first threshold, that the terminal device is close to the coverage area of the second signal, that is, the terminal device may determine that the terminal device is located in the access range corresponding to the first signal after the first moment.

In a possible implementation of the second aspect, the first information includes identification information of a third signal, and the coverage area of the first signal does not overlap a coverage area of the third signal.

Based on the foregoing technical solution, a signal coverage area of a broadcast signal sent by the network device may change due to movement of the network device. For the coverage area of the first signal, the coverage area of the third signal is located in a direction opposite to a movement direction of the network device. Due to movement of the network device, the coverage area of the first signal is far away from the coverage area of the second signal. In other words, the coverage area of the first signal does not overlap the coverage area of the third signal. Therefore, based on the identification information of the third signal included in the first information sent by the network device, when it is detected that signal quality of the third signal is less than a second threshold, the terminal device may determine that the terminal device is far away from the coverage area of the third signal, that is, the terminal device may determine that the terminal device is located in the access range corresponding to the first signal after the first moment.

In addition, based on the identification information of the second signal and the identification information of the third signal included in the first information sent by the network device, when it is detected that the signal quality of the second signal is less than a third threshold and the signal quality of the third signal is less than a fourth threshold, the terminal device may determine that a location of the terminal device is not close to the coverage area of the second signal nor the coverage area of the third signal. In other words, the terminal device determines that the location of the terminal device is located in a center area close to the coverage area of the first signal, that is, the terminal device may determine that the terminal device is located in the access range corresponding to the first signal after the first moment.

In a possible implementation of the second aspect, the first random access preamble includes a random access preamble corresponding to the first signal.

Based on the foregoing technical solution, the first random access preamble includes the random access preamble corresponding to the first signal. To be specific, when the terminal device determines that the terminal device is located in the access range corresponding to the first signal after the first moment, the terminal device sends the random access preamble corresponding to the first signal, so that the network device and the terminal device perform a random access procedure based on the first signal.

In a possible implementation of the second aspect, the method further includes: The network device sends first indication information. The first indication information indicates that the access range corresponding to the first signal includes at least two sub-ranges.

Based on the foregoing technical solution, the first information sent by the network device indicates that the access range corresponding to the first signal includes the at least two sub-ranges. Then, when the terminal device sends the random access preamble corresponding to the first signal, if the access range corresponding to the first signal includes the at least two sub-ranges, the terminal device may determine, based on the first indication information, that the terminal device is located in a target sub-range in the at least two sub-ranges. In other words, the access range corresponding to the first signal may be divided into the at least two sub-ranges, so that the terminal device determines, based on the first indication information, a location of the terminal device in the at least two sub-ranges.

In a possible implementation of the first aspect or the second aspect, different sub-ranges in the at least two sub-ranges correspond to different random access preamble configuration information, and the first random access preamble is configured based on random access preamble configuration information corresponding to the target sub-range; or different sub-ranges in the at least two sub-ranges correspond to different resource information, and resource information carrying the first random access preamble corresponds to the target sub-range.

Based on the foregoing technical solution, the terminal device may indicate, to the network device by using the random access preamble configuration information of the first random access preamble or the resource information carrying the first random access preamble, the location of the terminal device in the at least two sub-ranges. Therefore, after the network device determines the location of the terminal device in the at least two sub-ranges, the network device may communicate with the terminal device based on the location by using a corresponding signal, so that the network device flexibly adjusts communication with the terminal device based on the location of the terminal device.

In a possible implementation of the first aspect or the second aspect, the resource information includes time domain resource information and/or frequency domain resource information.

Optionally, the resource information further includes polarization information corresponding to the time domain resource information and/or the frequency domain resource information.

Based on the foregoing technical solution, in an implementation in which the terminal device indicates, to the network device by using the resource information carrying the first random access preamble, the location of the terminal device in the at least two sub-ranges, the terminal device may indicate, to the network device in the foregoing plurality of manners, the location of the terminal device in the at least two sub-ranges.

In a possible implementation of the first aspect or the second aspect, the first information is located in a system information block (system information block, SIB).

Optionally, the first information is a signal received and sent in a broadcast manner, and the first information may be further carried in another broadcast signal. This is not limited herein.

A third aspect of this application provides a communication method. The method is performed by a terminal device, or the method is performed by some components (for example, a processor, a chip, or a chip system) in a terminal device, or the method may be further implemented by a logic module or software that can implement all or some functions of a terminal device. In the third aspect and a possible implementation of the third aspect, an example in which the communication method is performed by a terminal device is described. In the method, the terminal device receives second information. The second information includes priorities of n signals, and n is an integer greater than 1. The terminal device sends a random access preamble corresponding to a signal with a highest priority in the n signals.

Based on the foregoing technical solution, the second information received by the terminal device includes the priorities of the n signals. Then, when the terminal device receives the n signals, the terminal device sends a random access preamble corresponding to the signal with the highest priority in the n signals. When a signal coverage area corresponding to a broadcast signal sent by a network device may change, the terminal device may be located in a coverage range of the n signals. In other words, the terminal device may receive the n signals. Then, the terminal device sends, based on the priorities of the n signals indicated by the second information, the random access preamble corresponding to the signal with the highest priority in the n signals. Therefore, compared with that of an implementation in which the signal coverage area corresponding to the broadcast signal sent by the network device may change and the terminal device may randomly select a signal from the n signals after receiving the n signals to send a random access preamble, the terminal device sends, based on an indication of the network device, the random access preamble corresponding to the signal with the highest priority in the n signals, so that the terminal device performs a random access procedure based on a priority indication of the network device, thereby reducing occurrence of a random access failure, so as to improve stability of a communication system.

Optionally, that the terminal device sends a random access preamble corresponding to a signal with a highest priority in the n signals includes: If the terminal device detects that signal quality of the n signals is greater than a threshold, the terminal device sends the random access preamble corresponding to the signal with the highest priority in the n signals.

A fourth aspect of this application provides a communication method. The method is performed by a network device, or the method is performed by some components (such as a processor, a chip, or a chip system) in a network device, or the method may be implemented by a logic module or software that can implement all or some functions of a network device. In the fourth aspect and a possible implementation of the fourth aspect, an example in which the communication method is performed by a network device is described. In the method, the network device generates second information. The second information includes priorities of n signals, and n is an integer greater than 1. The network device sends the second information.

Based on the foregoing technical solution, the second information sent by the network device includes the priorities of the n signals. Then, when a terminal device receives the n signals, the terminal device sends a random access preamble corresponding to a signal with a highest priority in the n signals. When a signal coverage area corresponding to a broadcast signal sent by the network device may change, the terminal device may be located in a coverage range of the n signals. In other words, the terminal device may receive the n signals. Then, the terminal device sends, based on the priorities of the n signals indicated by the second information, the random access preamble corresponding to the signal with the highest priority in the n signals. Therefore, compared with that of an implementation in which the signal coverage area corresponding to the broadcast signal sent by the network device may change and the terminal device may randomly select a signal from the n signals after receiving the n signals to send a random access preamble, the terminal device sends, based on an indication of the network device, the random access preamble corresponding to the signal with the highest priority in the n signals, so that the terminal device performs a random access procedure based on a priority indication of the network device, thereby reducing occurrence of a random access failure, so as to improve stability of a communication system.

In a possible implementation of the third aspect or the fourth aspect, the network device receives the random access preamble corresponding to the signal with a highest priority in the n signals.

Optionally, that the network device generates second information includes: The network device generates the second information based on movement information of the network device.

Based on the foregoing technical solution, the network device may generate the second information based on a signal coverage range of the n signals and the movement information of the network device. Due to movement of the network device, coverage areas of the n signals change. The network device may determine the coverage areas of the n signals based on the movement information of the network device, determine a signal in a movement direction of the network device as a high-priority signal indicated by the second information, and determine a signal in a direction opposite to the movement direction of the network device as a low-priority signal indicated by the second information. Therefore, when the terminal device sends, based on the indication of the network device, the random access preamble corresponding to the signal with the highest priority in the n signals, a signal corresponding to a random access preamble sent by the terminal device matches the movement direction of the network device, so as to reduce occurrence of a random access failure and improve stability of the communication system.

In a possible implementation of the third aspect or the fourth aspect, the n signals include a first signal.

The priorities of the n signals include relative priorities of (n-1) signals in the n signals to the first signal.

Based on the foregoing technical solution, the priorities that are of the n signals and that are indicated by the second information sent by the network device include the relative priorities of the (n-1) signals in the n signals to the first signal. In other words, the network device may indicate the priorities of the n signals in a relative priority manner. In addition, in an implementation in which the network device may indicate the priorities of the n signals in the relative priority manner, when the terminal device receives the first signal and any one or more of the (n-1) signals (the terminal device does not necessarily need to receive all the n signals), the terminal device may also determine, based on a relative priority indicated by the second information, a signal corresponding to a random access preamble to be sent.

Optionally, that the terminal device sends a random access preamble corresponding to a signal with a highest priority in the n signals includes: If the terminal device detects that signal quality of the first signal in the n signals and signal quality of any one or more of the (n-1) signals are greater than a threshold, the terminal device sends the random access preamble corresponding to the signal with the highest priority in the n signals.

A fifth aspect of this application provides a communication method. The method is performed by a terminal device, or the method is performed by some components (for example, a processor, a chip, or a chip system) in a terminal device, or the method may be implemented by a logic module or software that can implement all or some functions of a terminal device. In the fifth aspect and a possible implementation of the fifth aspect, an example in which the communication method is performed by a terminal device is described. In the method, the terminal device receives first indication information. The first indication information indicates at least two sub-ranges of an access range corresponding to a first signal. The terminal device sends a first random access preamble. Different sub-ranges in the at least two sub-ranges correspond to different random access preamble configuration information, and the first random access preamble is configured based on random access preamble configuration information corresponding to a target sub-range; or different sub-ranges in the at least two sub-ranges correspond to different resource information, and resource information carrying the first random access preamble corresponds to a target sub-range.

Based on the foregoing technical solution, the first indication information received by the terminal device indicates that the access range corresponding to the first signal includes the at least two sub-ranges. When the terminal device sends a random access preamble corresponding to the first signal, if the access range corresponding to the first signal includes the at least two sub-ranges, the terminal device may determine, based on the first indication information, that the terminal device is located in the target sub-range in the at least two sub-ranges. In other words, the access range corresponding to the first signal may be divided into the at least two sub-ranges, so that the terminal device determines, based on the first indication information, a location of the terminal device in the at least two sub-ranges. In addition, the terminal device may indicate, to a network device by using random access preamble configuration information of the first random access preamble or resource information carrying the first random access preamble, the location of the terminal device in the at least two sub-ranges. Therefore, after the network device determines the location of the terminal device in the at least two sub-ranges, the network device may communicate with the terminal device based on the location by using a corresponding signal, so that the network device flexibly adjusts communication with the terminal device based on the location of the terminal device.

A sixth aspect of this application provides a communication method. The method is performed by a network device, or the method is performed by some components (such as a processor, a chip, or a chip system) in a network device, or the method may be implemented by a logic module or software that can implement all or some functions of a network device. In the sixth aspect and a possible implementation of the sixth aspect, an example in which the communication method is performed by a network device is described. In the method, the network device sends first indication information. The first indication information indicates at least two sub-ranges of an access range corresponding to a first signal. The network device receives a first random access preamble. Different sub-ranges in the at least two sub-ranges correspond to different random access preamble configuration information, and the first random access preamble is configured based on random access preamble configuration information corresponding to a target sub-range; or different sub-ranges in the at least two sub-ranges correspond to different resource information, and resource information carrying the first random access preamble corresponds to a target sub-range.

Based on the foregoing technical solution, the first indication information sent by the network device indicates that the access range corresponding to the first signal includes the at least two sub-ranges. When the terminal device sends a random access preamble corresponding to the first signal, if the access range corresponding to the first signal includes the at least two sub-ranges, the terminal device may determine, based on the first indication information, that the terminal device is located in the target sub-range in the at least two sub-ranges. In other words, the access range corresponding to the first signal may be divided into the at least two sub-ranges, so that the terminal device determines, based on the first indication information, a location of the terminal device in the at least two sub-ranges. In addition, the terminal device may indicate, to the network device by using random access preamble configuration information of the first random access preamble or resource information carrying the first random access preamble, the location of the terminal device in the at least two sub-ranges. Therefore, after the network device determines the location of the terminal device in the at least two sub-ranges, the network device may communicate with the terminal device based on the location by using a corresponding signal, so that the network device flexibly adjusts communication with the terminal device based on the location of the terminal device.

In a possible implementation of the fifth aspect or the sixth aspect, the resource information includes time domain resource information and/or frequency domain resource information.

Optionally, the resource information further includes polarization information corresponding to the time domain resource information and/or the frequency domain resource information.

Based on the foregoing technical solution, in an implementation in which the terminal device indicates, to the network device by using the resource information carrying the first random access preamble, the location of the terminal device in the at least two sub-ranges, the terminal device may indicate, to the network device in the foregoing plurality of manners, the location of the terminal device in the at least two sub-ranges.

A seventh aspect of this application provides a communication apparatus. The apparatus may implement the method in any one of the first aspect or the possible implementations of the first aspect. The apparatus includes a corresponding unit or module configured to perform the method. The unit or module included in the apparatus can be implemented by software and/or hardware. For example, the apparatus may be a terminal device, or the apparatus may be a component (for example, a processor, a chip, or a chip system) in a terminal device, or the apparatus may be a logic module or software that can implement all or some functions of a terminal device.

The apparatus includes a processing unit and a transceiver unit.

The transceiver unit is configured to obtain first information. The first information is used to determine an access range corresponding to a first signal.

If the processing unit determines that the communication apparatus is located in the access range after a first moment, the transceiver unit sends a first random access preamble. The first random access preamble is associated with the first signal.

In a possible implementation of the seventh aspect, the first information includes at least one of the following:
location information of the access range, movement information of the access range, a duration threshold between a first moment and a sending moment of the first information, a duration threshold between the first moment and a receiving moment of the first information, or the first moment.

In a possible implementation of the seventh aspect, the first information includes identification information of a second signal, and a coverage area of the first signal overlaps a coverage area of the second signal.

If it is detected that signal quality of the second signal is greater than a first threshold, the processing unit determines that the communication apparatus is located in the access range after the first moment.

In a possible implementation of the seventh aspect, the first information includes identification information of a third signal, and the coverage area of the first signal does not overlap a coverage area of the third signal.

If it is detected that signal quality of the third signal is less than a second threshold, the processing unit determines that the communication apparatus is located in the access range after the first moment.

In a possible implementation of the seventh aspect, the first information includes the identification information of the second signal and the identification information of the third signal, the coverage area of the first signal overlaps the coverage area of the second signal, and the coverage area of the third signal does not overlap the coverage area of the first signal.

If it is detected that the signal quality of the second signal is less than a third threshold and the signal quality of the third signal is less than a fourth threshold, the processing unit determines that the communication apparatus is located in the access range after the first moment.

In a possible implementation of the seventh aspect, the first random access preamble includes a random access preamble corresponding to the first signal.

In a possible implementation of the seventh aspect, the receiving unit is further configured to receive first indication information. The first indication information indicates that the access range corresponding to the first signal includes at least two sub-ranges.

The processing unit is further configured to determine, based on the first indication information, that the communication apparatus is located in a target sub-range in the at least two sub-ranges.

In the seventh aspect of embodiments of this application, composition modules of the communication apparatus may be further configured to perform the steps performed in the possible implementations of the first aspect, and implement corresponding technical effects. For details, refer to the first aspect. Details are not described herein again.

An eighth aspect of this application provides a communication apparatus. The apparatus may implement the method in any one of the second aspect or the possible implementations of the second aspect. The apparatus includes a corresponding unit or module configured to perform the method. The unit or module included in the apparatus can be implemented by software and/or hardware. For example, the apparatus may be a terminal device, or the apparatus may be a component (for example, a processor, a chip, or a chip system) in a network device, or the apparatus may be a logic module or software that can implement all or some functions of a network device.

The apparatus includes a processing unit and a transceiver unit.

The processing unit is configured to generate first information. The first information is used to determine an access range corresponding to a first signal.

The transceiver unit is configured to send the first information.

If the communication apparatus is located in the access range after a first moment, the transceiver unit is further configured to receive a first random access preamble. The first random access preamble is associated with the first signal.

In a possible implementation of the eighth aspect, the first information includes at least one of the following:
location information of the access range, movement information of the access range, a duration threshold between the first moment and a sending moment of the first information, a duration threshold between the first moment and a receiving moment of the first information, or the first moment.

In a possible implementation of the eighth aspect, the first information includes identification information of a second signal, and a coverage area of the first signal overlaps a coverage area of the second signal.

In a possible implementation of the eighth aspect, the first information includes identification information of a third signal, and the coverage area of the first signal does not overlap a coverage area of the third signal.

In a possible implementation of the eighth aspect, the first random access preamble includes a random access preamble corresponding to the first signal.

In a possible implementation of the eighth aspect, the transceiver unit is further configured to send first indication information. The first indication information indicates that the access range corresponding to the first signal includes at least two sub-ranges.

In a possible implementation of the eighth aspect, different sub-ranges in the at least two sub-ranges correspond to different random access preamble configuration information, and the first random access preamble is configured based on random access preamble configuration information corresponding to a target sub-range.

Alternatively, different sub-ranges in the at least two sub-ranges correspond to different time-frequency resources, and a time-frequency resource carrying the first random access preamble corresponds to a target sub-range.

In a possible implementation of the eighth aspect, the first information is located in a system information block.

In the eighth aspect of embodiments of this application, composition modules of the communication apparatus may be further configured to perform the steps performed in the possible implementations of the second aspect, and implement corresponding technical effects. For details, refer to the second aspect. Details are not described herein again.

A ninth aspect of this application provides a communication apparatus. The apparatus may implement the method in any one of the third aspect or the possible implementations of the third aspect. The apparatus includes a corresponding unit or module configured to perform the method. The unit or module included in the apparatus can be implemented by software and/or hardware. For example, the apparatus may be a terminal device, or the apparatus may be a component (for example, a processor, a chip, or a chip system) in a terminal device, or the apparatus may be a logic module or software that can implement all or some functions of a terminal device.

The apparatus includes a processing unit and a transceiver unit.

The transceiver unit is configured to receive second information. The second information includes priorities of n signals, and n is an integer greater than 1.

The processing unit is configured to determine a random access preamble corresponding to a signal with a highest priority in the n signals.

The transceiver unit is further configured to send the random access preamble corresponding to the signal with the highest priority in the n signals.

A tenth aspect of this application provides a communication apparatus. The apparatus may implement the method in any one of the fourth aspect or the possible implementations of the fourth aspect. The apparatus includes a corresponding unit or module configured to perform the method. The unit or module included in the apparatus can be implemented by software and/or hardware. For example, the apparatus may be a terminal device, or the apparatus may be a component (for example, a processor, a chip, or a chip system) in a network device, or the apparatus may be a logic module or software that can implement all or some functions of a network device.

The apparatus includes a processing unit and a transceiver unit.

The processing unit is configured to generate second information. The second information includes priorities of n signals, and n is an integer greater than 1.

The transceiver unit is configured to send the first information.

In a possible implementation of the ninth aspect or the tenth aspect, the network device receives a random access preamble corresponding to a signal with a highest priority in the n signals.

In a possible implementation of the ninth aspect or the tenth aspect, the n signals include a first signal.

The priorities of the n signals include relative priorities of (n-1) signals in the n signals to the first signal.

In the ninth aspect of embodiment of this application, the composition modules of the communication apparatus may be further configured to perform the steps performed in the possible implementations of the third aspect, and implement corresponding technical effects. For details, refer to the third aspect. Details are not described herein again.

In the tenth aspect of embodiment of this application, composition modules of the communication apparatus may be further configured to perform the steps performed in the possible implementations of the fourth aspect, and implement corresponding technical effects. For details, refer to the fourth aspect. Details are not described herein again.

An eleventh aspect of this application provides a communication apparatus. The apparatus may implement the method in any one of the fifth aspect or the possible implementations of the fifth aspect. The apparatus includes a corresponding unit or module configured to perform the method. The unit or module included in the apparatus can be implemented by software and/or hardware. For example, the apparatus may be a terminal device, or the apparatus may be a component (for example, a processor, a chip, or a chip system) in a terminal device, or the apparatus may be a logic module or software that can implement all or some functions of a terminal device.

The apparatus includes a processing unit and a transceiver unit.

The transceiver unit is configured to receive first indication information. The first indication information indicates at least two sub-ranges of an access range corresponding to a first signal.

The processing unit is configured to determine a first random access preamble.

The transceiver unit is further configured to send the first random access preamble.

Different sub-ranges in the at least two sub-ranges correspond to different random access preamble configuration information, and the first random access preamble is configured based on random access preamble configuration information corresponding to a target sub-range.

Alternatively, different sub-ranges in the at least two sub-ranges correspond to different resource information, and resource information carrying the first random access preamble corresponds to a target sub-range.

In the eleventh aspect of embodiments of this application, composition modules of the communication apparatus may be further configured to perform the steps performed in the possible implementations of the fifth aspect, and implement corresponding technical effects. For details, refer to the fifth aspect. Details are not described herein again.

A twelfth aspect of this application provides a communication apparatus. The apparatus may implement the method in any one of the sixth aspect or the possible implementations of the sixth aspect. The apparatus includes a corresponding unit or module configured to perform the method. The unit or module included in the apparatus can be implemented by software and/or hardware. For example, the apparatus may be a terminal device, or the apparatus may be a component (for example, a processor, a chip, or a chip system) in a network device, or the apparatus may be a logic module or software that can implement all or some functions of a network device.

The apparatus includes a processing unit and a transceiver unit.

The processing unit is configured to determine first indication information. The first indication information indicates at least two sub-ranges in an access range corresponding to a first signal.

The transceiver unit is configured to send the first indication information.

The transceiver unit is further configured to receive a first random access preamble.

Different sub-ranges in the at least two sub-ranges correspond to different random access preamble configuration information, and the first random access preamble is configured based on random access preamble configuration information corresponding to a target sub-range.

Alternatively, different sub-ranges in the at least two sub-ranges correspond to different resource information, and resource information carrying the first random access preamble corresponds to a target sub-range.

In a possible implementation of the eleventh aspect or the twelfth aspect, the resource information includes time domain resource information and/or frequency domain resource information.

In a possible implementation of the eleventh aspect or the twelfth aspect, the resource information further includes polarization information corresponding to the time domain resource information and/or the frequency domain resource information.

In the twelfth aspect of embodiments of this application, composition modules of the communication apparatus may be further configured to perform the steps performed in the possible implementations of the sixth aspect, and implement corresponding technical effects. For details, refer to the sixth aspect. Details are not described herein again.

A thirteenth aspect of embodiments of this application provides a communication apparatus, including at least one processor. The at least one processor is coupled to a memory.

The memory is configured to store a program or instructions.

The at least one processor is configured to execute the program or instructions, so that the apparatus implements the method in any one of the first aspect or the possible implementations of the first aspect, or the apparatus implements the method in any one of the second aspect or the possible implementations of the second aspect, or the apparatus implements the method in any one of the third aspect or the possible implementations of the third aspect, or the apparatus implements the method in any one of the fourth aspect or the possible implementations of the fourth aspect, or the apparatus implements the method in any one of the fifth aspect or the possible implementations of the fifth aspect, or the apparatus implements the method in any one of the sixth aspect or the possible implementations of the sixth aspect.

A fourteenth aspect of embodiments of this application provides a communication apparatus, including at least one logic circuit and an input/output interface.

The logic circuit is configured to perform the method in any one of the first aspect or the possible implementations of the first aspect, or the logic circuit is configured to perform the method in any one of the second aspect or the possible implementations of the second aspect, or the logic circuit is configured to perform the method in any one of the third aspect or the possible implementations of the third aspect, or the logic circuit is configured to perform the method in any one of the fourth aspect or the possible implementations of the fourth aspect, or the logic circuit is configured to perform the method in any one of the fifth aspect or the possible implementations of the fifth aspect, or the logic circuit is configured to perform the method in any one of the sixth aspect or the possible implementations of the sixth aspect.

A fifteenth aspect of embodiments of this application provides a computer-readable storage medium storing one or more computer-executable instructions. When the computer-executable instructions are executed by a processor, the processor performs the method in any one of the first aspect or the possible implementations of the first aspect, or the processor performs the method in any one of the second aspect or the possible implementations of the second aspect, or the processor performs the method in any one of the third aspect or the possible implementations of the third aspect, or the processor performs the method in any one of the fourth aspect or the possible implementations of the fourth aspect, or the processor performs the method in any one of the fifth aspect or the possible implementations of the fifth aspect, or the processor performs the method in any one of the sixth aspect or the possible implementations of the sixth aspect.

A sixteenth aspect of embodiments of this application provides a computer program product (or referred to as a computer program) storing one or more computers. When the computer program product is executed by a processor, the processor performs the method in any one of the first aspect or the possible implementations of the first aspect, or the processor performs the method in any one of the second aspect or the possible implementations of the second aspect, or the processor performs the method in any one of the third aspect or the possible implementations of the third aspect, or the processor performs the method in any one of the fourth aspect or the possible implementations of the fourth aspect, or the processor performs the method in any one of the fifth aspect or the possible implementations of the fifth aspect, or the processor performs the method in any one of the sixth aspect or the possible implementations of the sixth aspect.

A seventeenth aspect of embodiments of this application provides a chip system. The chip system includes at least one processor, configured to support a communication apparatus to implement the function in any one of the first aspect or the possible implementations of the first aspect, or configured to support the communication apparatus to implement the function in any one of the second aspect or the possible implementations of the second aspect, or configured to support the communication apparatus to implement the function in any one of the third aspect or the possible implementations of the third aspect, or configured to support the communication apparatus to implement the function in any one of the fourth aspect or the possible implementations of the fourth aspect, or configured to support the communication apparatus to implement the function in any one of the fifth aspect or the possible implementations of the fifth aspect, or configured to support the communication apparatus to implement the function in any one of the sixth aspect or the possible implementations of the sixth aspect.

In a possible design, the chip system may further include a memory. The memory is configured to store program instructions and data that are necessary for the first communication apparatus. The chip system may include a chip, or may include a chip and another discrete component. Optionally, the chip system further includes an interface circuit, and the interface circuit provides program instructions and/or data for the at least one processor.

An eighteenth aspect of embodiments of this application provides a communication system. The communication system includes the communication apparatus in the third aspect and the communication apparatus in the fourth aspect, and/or the communication system includes the communication apparatus in the fifth aspect and the communication apparatus in the sixth aspect, and/or the communication system includes the communication apparatus in the seventh aspect and the communication apparatus in the eighth aspect, and/or the communication system includes the communication apparatus in the ninth aspect and the communication apparatus in the tenth aspect; and/or the communication system includes the communication apparatus in the eleventh aspect and the communication apparatus in the twelfth aspect, and/or the communication system includes the communication apparatus in the thirteenth aspect, and/or the communication system includes the communication apparatus in the fourteenth aspect.

For technical effects brought by any design manner in the seventh aspect to the eighteenth aspect, refer to technical effects brought by different design manners in the first aspect to the sixth aspect. Details are not described herein again.

It can be learned from the foregoing technical solution that the first information obtained by the terminal device is used to determine the access range corresponding to the first signal, and the terminal device may determine, based on the first information, whether the terminal device is located in the access range after the first moment. When the terminal device determines that the terminal device is located in the access range after the first moment, the terminal device sends the first random access preamble associated with the first signal, to perform a random access procedure. In other words, the terminal device sends the first random access preamble associated with the first signal only when the terminal device determines, in the random access procedure, that the terminal device is located in an access region of the first signal. Therefore, occurrence of a random access failure is reduced when a signal coverage area corresponding to a broadcast signal sent by the network device may change, so as to improve stability of the communication system.

### BRIEF DESCRIPTION OF DRAWINGS

FIG. 1a is a schematic diagram of a communication scenario according to this application;
FIG. 1b is another schematic diagram of a communication scenario according to this application;
FIG. 2a is another schematic diagram of a communication scenario according to this application;
FIG. 2b is another schematic diagram of a communication scenario according to this application;
FIG. 2c is another schematic diagram of a communication scenario according to this application;
FIG. 2d is another schematic diagram of a communication scenario according to this application;
FIG. 3 is a schematic diagram of a communication method according to this application;
FIG. 4a is another schematic diagram of a communication scenario according to this application;
FIG. 4b is another schematic diagram of a communication scenario according to this application;
FIG. 5 is a schematic diagram of a communication method according to this application;
FIG. 6a is another schematic diagram of a communication method according to this application;
FIG. 6b is another schematic diagram of a communication method according to this application;
FIG. 7a is another schematic diagram of a communication method according to this application;
FIG. 7b is another schematic diagram of a communication method according to this application;
FIG. 7c is another schematic diagram of a communication method according to this application;
FIG. 8a is another schematic diagram of a communication method according to this application;
FIG. 8b is another schematic diagram of a communication method according to this application;
FIG. 9 is another schematic diagram of a communication method according to this application;
FIG. 10 is another schematic diagram of a communication method according to this application;
FIG. 11 is another schematic diagram of a communication method according to this application;
FIG. 12a is another schematic diagram of a communication method according to this application;
FIG. 12b is another schematic diagram of a communication method according to this application;
FIG. 13a is another schematic diagram of a communication method according to this application;
FIG. 13b is another schematic diagram of a communication method according to this application;
FIG. 14 is a schematic diagram of a communication apparatus according to this application;
FIG. 15 is another schematic diagram of a communication apparatus according to this application;
FIG. 16 is another schematic diagram of a communication apparatus according to this application; and
FIG. 17 is another schematic diagram of a communication apparatus according to this application.

### DESCRIPTION OF EMBODIMENTS

The following describes the technical solutions in embodiments of this application with reference to the accompanying drawings in embodiments of this application. All other embodiments obtained by a person of ordinary skill in the art based on embodiments of this application without creative efforts shall fall within the protection scope of this application.

First, some terms in embodiments of this application are explained and described, to facilitate understanding of a person skilled in the art.

(1) Terminal device: The terminal device may be a wireless terminal device that can receive scheduling and indication information of a network device. The wireless terminal device may be a device that provides voice and/or data connectivity for a user, a handheld device having a wireless connection function, or another processing device connected to a wireless modem.

The terminal device may communicate with one or more core networks or the internet through a radio access network (radio access network, RAN). The terminal device may be a mobile terminal device such as a mobile telephone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges a voice and/or data with the radio access network. For example, the wireless terminal device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station device (subscriber station, SS), customer premises equipment (customer premises equipment, CPE), a terminal (terminal), user equipment (user equipment, UE), a mobile terminal (mobile terminal, MT), an uncrewed aerial vehicle, or the like. The terminal device may alternatively be a wearable device and a terminal device in a next generation communication system, for example, a terminal device in a 5G communication system or a terminal device in a future evolved public land mobile network (public land mobile network, PLMN).

(2) Network device: The network device may be a device in a wireless network. For example, the network device may be a radio access network (RAN) node (or device) that connects a terminal device to the wireless network. It can also be referred to as a base station. Currently, for example, the RAN device may be a next generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node.

In some implementations, the network device may further include a satellite, an airplane, an uncrewed aerial vehicle, or the like.

The network device can send configuration information (for example, carried in a scheduling message and/or an indication message) to the terminal device. The terminal device further performs network configuration based on the configuration information, so that network configurations of the network device and the terminal device are aligned. Alternatively, through a network configuration preset in the network device and a network configuration preset in the terminal device, network configurations of the network device and the terminal device are aligned. Specifically, "alignment" means that when there is an interaction message between the network device and the terminal device, the network device and the terminal device have a consistent understanding of a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used for describing the technical solutions provided in embodiments of this application.

(3) Configuration and preconfiguration: In this application, both the configuration and the preconfiguration are used. The configuration means that a network device sends configuration information of some parameters or parameter values to a terminal device by using a message or signaling, so that the terminal device determines a communication parameter or a transmission resource based on the values or the information. Similar to the configuration, the preconfiguration may be parameter information or a parameter value negotiated by the network device and the terminal device in advance, or may be parameter information or a parameter value that is used by the network device or the terminal device and that is specified in a standard protocol, or may be parameter information or a parameter value that is pre-stored in the network device or the terminal device. This is not limited in this application.

Further, these values and parameters may be changed or updated.

(4) Terms "system" and "network" in embodiments of this application may be used interchangeably. "At least one" means one or more, and "a plurality of" means two or more. "And/or" describes an association relationship between associated objects and represents that three relationships may exist. For example, A and/or B may represent the following cases: Only A exists, both A and B exist, and only B exists, where A and B each may be in a singular or plural form. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

This application may be applied to a long-term evolution (long-term evolution, LTE) system, a new radio (new radio, NR) system, or a new radio vehicle to everything (NR vehicle to everything, NR V2X) system; and may alternatively be applied to a system in which LTE and 5G network in a hybrid manner; or a device-to-device (device-to-device, D2D) communication system, a machine-to-machine (machine to machine, M2M) communication system, an internet of things (Internet of Things, IoT), or an uncrewed aerial vehicle communication system; or a communication system that supports a plurality of wireless technologies, for example, an LTE technology and an NR technology; or a non-terrestrial communication system, for example, a satellite communication system, a high-altitude communication platform, or the like. In addition, optionally, the communication system may also be applicable to a narrowband-internet of things (narrowband-internet of things, NB-IoT) system, an enhanced data rates for GSM evolution (enhanced data rates for GSM evolution, EDGE) system, and a wideband code division multiple access (wideband code division multiple access, WCDMA) system, a code division multiple access 2000 (code division multiple access, CDMA 2000) system, a time division-synchronous code division multiple access (time division-synchronous code division multiple access, TD-SCDMA) system, and a future-oriented communication technology; or another communication system. The communication system includes a network device and a terminal device. The network device is used as a configuration information sending entity, and the terminal device is used as a configuration information receiving entity. Specifically, an entity in the communication system sends configuration information to another entity, and sends data to the another entity, or receives data sent by the another entity. The another entity receives the configuration information, and sends data to the configuration information sending entity based on the configuration information, or receives data sent by the configuration information sending entity. This application may be applied to a terminal device in a connected state or an active (active) state, or may be applied to a terminal device in a non-connected (inactive) state or an idle (idle) state.

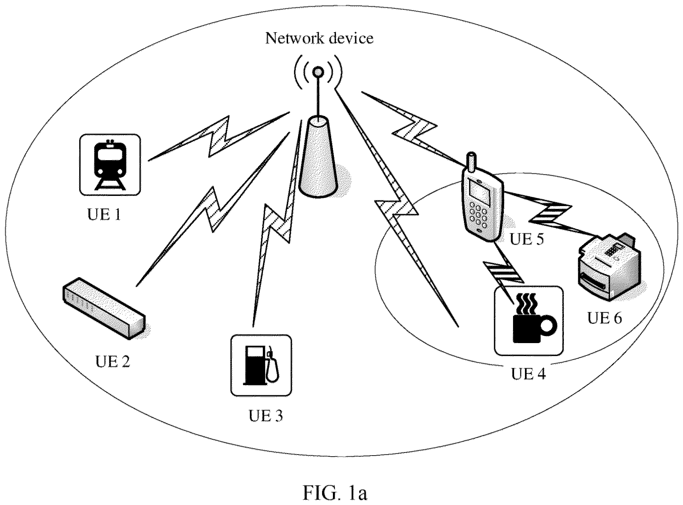

FIG. 1a is a schematic diagram of an application scenario according to an embodiment of this application. As shown in FIG. 1a, a configuration information sending entity may be a network device, and a configuration information receiving entity may be UE 1 to UE 6. In this case, a base station and the UE 1 to the UE 6 form a communication system. In the communication system, the UE 1 to the UE 6 may send uplink data to the network device. The network device needs to receive the uplink data sent by the UE 1 to the UE 6. In addition, the network device may send configuration information to the UE 1 to the UE 6.

As shown in FIG. 1a, in a communication procedure, a sending device (or referred to as a transmitting end or a transmitting end device) may be the network device, and a receiving device (or referred to as a receiving end or a receiving end device) may be a terminal device; or the sending device may be a terminal device, and the receiving device may be the network device; or both the sending device and the receiving device may be the network devices; or both the sending device and the receiving device may be terminal devices.

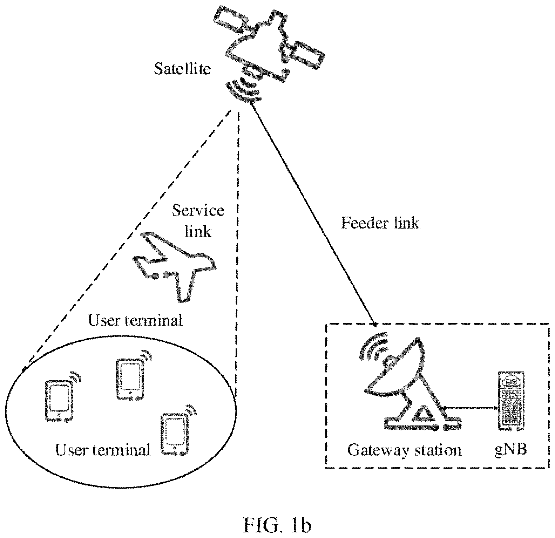

FIG. 1b is a schematic diagram of another application scenario according to an embodiment of this application. The communication scenario shown in FIG. 1b may be referred to as a satellite communication scenario. In this scenario, a network device includes a satellite device and a gateway (gateway) station. A terminal device includes an internet of things terminal, or may be a terminal of another form and performance, for example, a mobile phone mobile terminal or a high-altitude aircraft. This is not limited herein. A link between a satellite and the terminal device is referred to as a service link (service link), and a link between the satellite and the gateway is referred to as a feeder link (feeder link). The solutions of this application may also be applied to a multi-satellite communication scenario extended by the communication scenario shown in FIG. 1b.

It should be noted that the technical solutions in embodiments of this application are applicable to a communication system that integrates terrestrial communication and satellite communication. The communication system may also be referred to as a non-terrestrial network (non-terrestrial network, NTN) communication system. A terrestrial communication system may be, for example, a long-term evolution (long-term evolution, LTE) system, a universal mobile telecommunications system (universal mobile telecommunications system, UMTS), a 5G communication system or a new radio (new radio, NR) system, or a communication system developed in a next step of a 5G communication system. This is not limited herein.

Compared with a conventional mobile communication system, satellite communication has a wider coverage range, supports a fact that a transmission link and communication costs are not related to a transmission distance, and has advantages such as overcoming natural geographical obstacles like oceans, deserts, and mountains. To overcome shortcomings of a conventional communication network, satellite communication may be used as an effective supplement to the conventional network.

It is generally considered that, compared with terrestrial communication, non-terrestrial communication (non-terrestrial network, NTN) communication has different channel characteristics, such as a large transmission latency and a large Doppler frequency offset. For example, a round-trip latency of GEO satellite communication is 238-270 milliseconds (ms). A round-trip latency of LEO satellite communication is 8-20 ms. Based on different orbit altitudes, satellite communication systems may be classified into the following three types: a high earth orbit (geostationary earth orbit, GEO) satellite communication system, also referred to as a synchronous orbit satellite system; a medium earth orbit (medium earth orbit, MEO) satellite communication system; and a low earth orbit (low earth orbit, LEO) satellite communication system.

A GEO satellite is also called a geostationary orbit satellite, and an orbit altitude may be 35,786 kilometers (km). A main advantage of the GEO satellite is that the GEO satellite is stationary relative to the ground and provides a large coverage area. However, an orbit satellite of the GEO satellite also has prominent shortcomings. If a distance from the earth is quite large, a larger diameter antenna is required. A transmission latency is long, and is about 0.5s, which cannot meet a requirement of a real-time service. In addition, the GEO satellite has limited orbit resources, high transmission costs, and cannot provide coverage for the polar regions. An MEO satellite has an orbit altitude of 2,000-35,786 km, and a small quantity of MEO satellites can implement global coverage. However, the MEO satellite has a longer transmission latency than an LEO satellite and is mainly used for positioning and navigation. A satellite with an orbit altitude of 300-2,000 km is referred to as a low earth orbit (LEO) satellite. Compared with the MEO satellite and the GEO satellite, the LEO satellite has a lower orbit altitude, a shorter data transmission latency, less power loss, and lower launch costs. Therefore, an LEO satellite communication network has progressed in recent years and has attracted attention.

In a possible implementation, the satellite device may be classified into a transparent (transparent) mode and a regenerative (regenerative) mode based on a working mode.

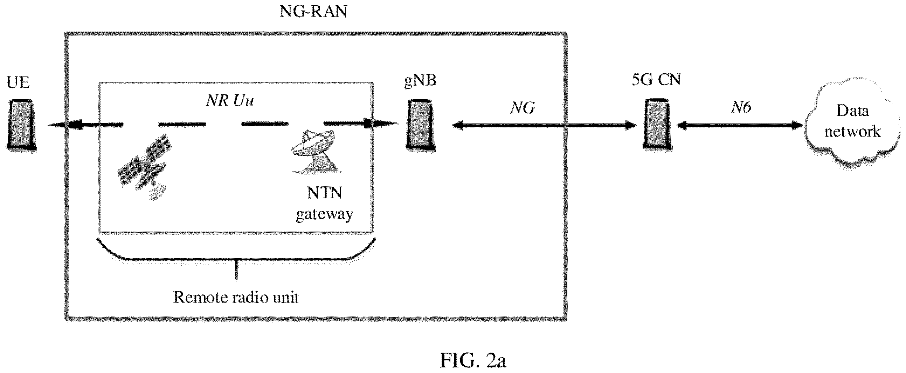

The following describes the two modes as examples by using implementations shown in FIG. 2a to FIG. 2d. In the following example, the terminal device is UE, and the network device is a gNB.

In an implementation of the transparent mode shown in FIG. 2a, a satellite and a gateway station (namely, an NTN Gateway in FIG. 2a) serve as a relay, that is, a remote radio unit (Remote Radio Unit) shown in FIG. 2a, and communication between the UE and the gNB needs to be implemented by using the relay procedure. In other words, in the transparent transmission mode, a satellite has a relay forwarding function.

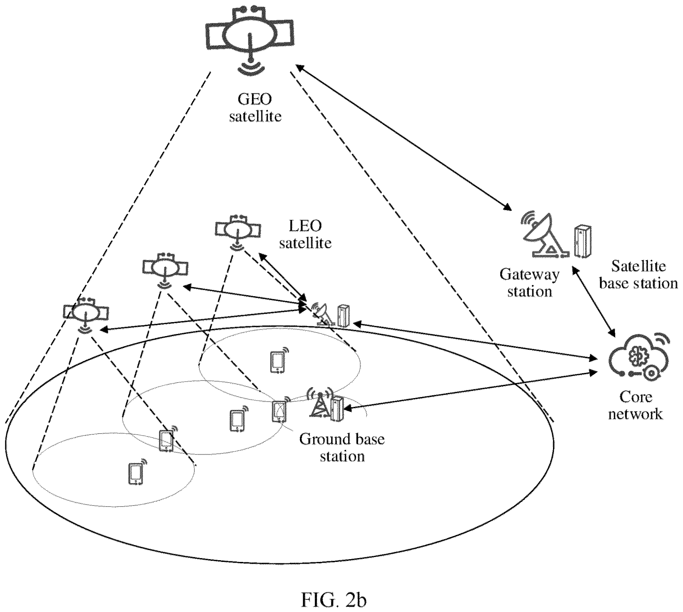

For example, in an implementation of the transparent mode shown in FIG. 2b, when a satellite (including a GEO satellite and an LEO satellite) works in the transparent transmission mode, the satellite has a relay forwarding function. A gateway station has functions of the base station or some functions of the base station. In this case, the gateway station may be considered as a base station. Alternatively, the base station and the gateway station may be separately deployed. In this case, a latency of a feeder link includes two parts: a latency from the satellite to the gateway station and a latency from the gateway station to the gNB.

Optionally, in the transparent mode, a case in which the gateway station and the gNB are located together or are close to each other may be used as an example. When the gateway station is far away from the gNB, a feeder link latency is a sum of a latency from the satellite to the gateway station and a latency from the gateway station to the gNB.

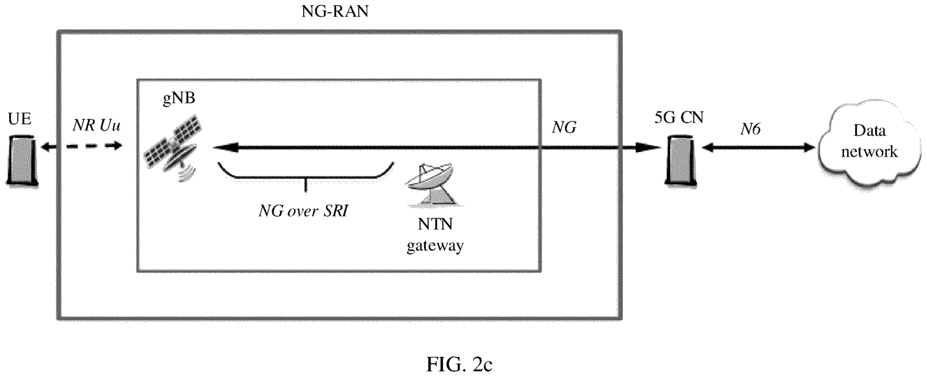

In an implementation of the regenerative mode shown in FIG. 2c, the satellite and the gateway station (that is, the NTN Gateway in FIG. 2c) are used as a gNB, and may communicate with the UE. In other words, in the regenerative mode, the satellite has functions of the base station or some functions of the base station. In this case, the satellite may be considered as a base station.

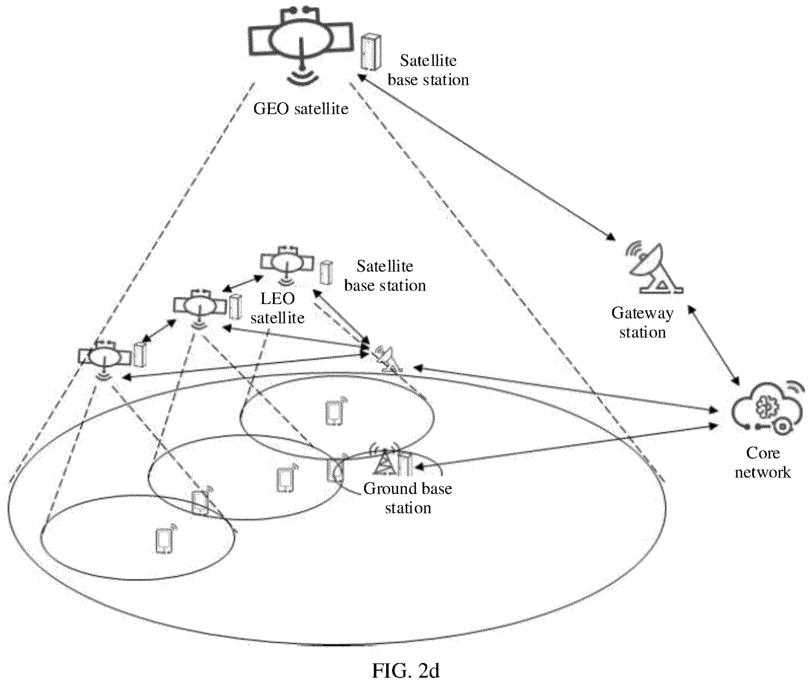

For example, in an implementation of the regenerative mode shown in FIG. 2d, when a satellite (including a GEO satellite and an LEO satellite) works in the regenerative mode, compared with the implementation shown in FIG. 2b, the satellite has functions of a base station or some functions of a base station. In this case, the satellite may be considered as a base station.

It should be noted that the NTN and a base station of the terrestrial network may be interconnected through a common core network. Alternatively, assistance and interconnection with higher time validity may be implemented by through an interface defined between base stations. In NR, an interface between base stations is referred to as an Xn interface, and an interface between a base station and a core network is referred to as an NG interface. In a fusion network, both an NTN node and a ground node may implement interworking and collaboration through the foregoing interface.

The foregoing content describes a plurality of wireless communication scenarios in this application. It should be understood that the foregoing content is merely an example description of a scenario to which this application may be applied. This application may be further applied to another application scenario. This is not limited herein. The following describes a random access procedure of wireless communication in this application.

In the foregoing network architecture, the network architecture may be specifically used to implement a random access procedure between the terminal device and the network device. The following describes some terms related to the random access procedure in embodiments of this application.

Random access (random access, RA): In a communication system, the random access is an information exchange mechanism (or procedure) used for establishing a connection between a device that does not access a network and the network. There are two types of random access: contention-based random access and contention-free random access. The contention-based random access usually includes four steps, and each step corresponds to a message. A message 1, a message 2, a message 3, and a message 4 are included, which carry different signaling or information. The contention-free random access includes only the first two steps. In addition, to reduce an access time of the four-step contention-based random access, two-step random access is further provided. The two-step random access includes a message A and a message B. The message A includes a preamble and 1st data information (similar to the message 1 and the message 3 in the four-step random access), and the message B includes contention resolution and uplink scheduling (similar to the message 2 and the message 4 in the four-step random access).

Message 1 (message 1, Msg 1): The message 1 is a random access preamble (preamble or sequence), and is carried on a physical random access channel (physical random access channel, PRACH). In other words, a random access signal corresponding to the random access preamble is sent on a random access time-frequency resource. The time-frequency resource for sending the random access preamble is also referred to as a random access occasion (PRACH occasion). At a physical layer, the message 1 is also referred to as a PRACH signal or a PRACH, and is usually used to initiate a connection request, a handover request, a synchronization request, or a scheduling request between a device and a network.

Message 2 (message 2, Msg 2): The message 2 is also referred to as a random access response (random access response, RAR) message. The message 2 is a response of a network side to the received message 1, and one message 2 may respond to a plurality of Msgs 1. If the network side receives the message 1, the network side encapsulates and sends at least one piece of the following information: an index (random access preamble identifier, RAPID) of the message 1, an uplink scheduling grant (uplink grant), timing advance (timing advance), a temporary cell radio network temporary identifier (temporary cell radio network temporary identifier, TC-RNTI), and the like. The network side may respond to the plurality of Msgs 1 in a same Msg 2.

Message 3 (message 3, Msg 3): The message 3 is also referred to as first uplink scheduling transmission, and is transmission scheduled by using the uplink resource UL grant in the message 2, or is transmission scheduled by using downlink control information (downlink control information, DCI) that is scrambled by using the TC-RNTI. Content transmitted in the Msg 3 is a high-layer message, for example, a connection establishment request message (which may be specifically identification information of a user who initiates a connection request). The message is used for contention resolution. If a plurality of different devices use a same Msg 1 to perform random access, whether a conflict exists may be jointly determined by using the Msg 3 and the Msg 4. The Msg 3 may be defined as a message transmitted on UL-SCH (uplink shared channel) containing a C-RNTI MAC (Medium access control) CE (control element) or CCCH (Common Control Channel) SDU (Service Data Unit), submitted from upper layer and associated with the UE contention resolution identity, as part of a random access procedure. Transmission of the message 3 includes retransmission and power control (to be specific, a UL grant for scheduling initial transmission or retransmission includes power control information).

Message 4 (message 4, Msg 4): The message 4 is used for contention resolution. Usually, the message 4 includes the CCCH SDU carried in the message 3. If a device detects, in the message 4, the CCCH SDU sent by the device, the device considers that contention-based random access succeeds, and continues to perform a subsequent communication procedure. The message 4 includes retransmission, that is, a corresponding physical uplink control channel (physical uplink control channel, PUCCH) transmits feedback information (whether the message 4 is successfully detected), and power control is performed for sending the feedback information by the device on the PUCCH.

Beam: The beam is a communication resource. The beam may be formed by using a beamforming technology or in another technical means. The beamforming technology may be specifically a digital beamforming technology, an analog beamforming technology, or a hybrid digital/analog beamforming technology. Different beams may be represented as different resources. Same information or different information may be sent by different beams. Optionally, a plurality of beams having a same communication feature or similar communication features may be considered as one beam. One beam may include one or more antenna ports, configured to transmit a data channel, a control channel, a sounding signal, and the like, and the beam has specific directivity or a specific characteristic in space. For example, a transmit beam may be signal strength distribution formed in different directions in space after a signal is transmitted through an antenna, and a receive beam may be signal strength distribution of a radio signal received from an antenna in different directions in space. It may be understood that one or more antenna ports forming one beam may also be considered as one antenna port set. The beam may alternatively be represented as a spatial filter (spatial filter) in a protocol. For example, the transmit beam is a spatial domain transmission filter (spatial domain transmission filter), and the receive beam is a spatial domain transmission filter (spatial domain receiver filter). That a transmit beam is the same as a receive beam may mean that the spatial domain transmission filter is the same as the spatial domain receiver filter.

It should be understood that different beams may be distinguished in a protocol based on a bandwidth part (bandwidth part, BWP), a transmission configuration indicator (transmission configuration indicator, TCI), or a synchronization signal block (synchronization signal block, SSB). In other words, a beam may be indicated based on a BWP, a TCI, or an SSB. For example, for a terminal and a network device, switching between beams may be indicated by switching between a BWP, a TCI, or an SSB. Therefore, for the terminal and/or the network device, switching actually performed may be the switching between the BWP, the TCI, or the SSB. Therefore, the beam described in this application may also be replaced with the BWP, the TCI, or the SSB.

Message: The message is a type of upper-layer data packet in a radio access network, and includes a data message and a control message. At a physical layer, the message is carried on a physical channel and transmitted through an antenna in a form of a physical signal. Therefore, for same data or control, both an upper-layer name "message" and a physical-layer name "signal" or "channel" may be used.

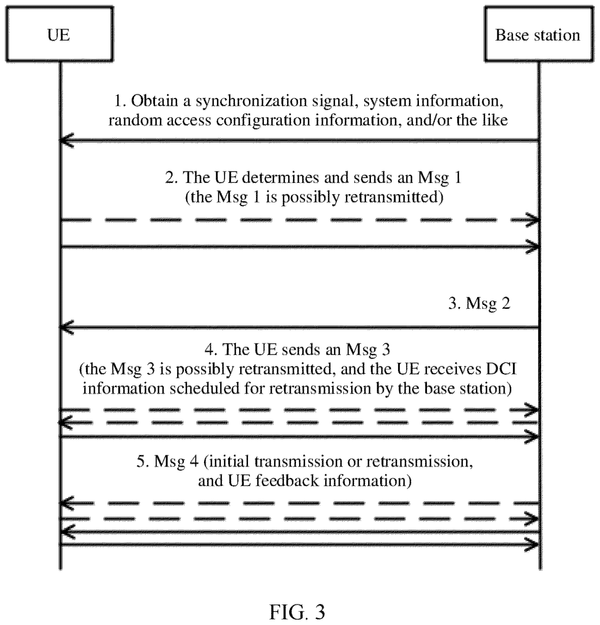

Herein, an example in which the random access procedure is implemented in 5G NR is used for description. Refer to FIG. 3. The random access procedure mainly includes the following several steps.

1. A base station sends a synchronization signal and system information (a broadcast message sent in a broadcast manner) at a specific location. In NR, the synchronization signal sent by the base station is a synchronization signal/physical broadcast channel block (synchronization signal/PBCH block, SS/PBCH block), or referred to as a synchronization signal block. The SS/PBCH block and the system information are periodically sent by the base station based on a configuration. After UE is powered on or needs to re-access a network, the UE scans the synchronization signal of the base station, performs downlink time and frequency synchronization, and receives configuration information related to a random access resource in the system information.

2. The UE selects a specific random access resource based on the random resource configuration information. The resource includes a time-frequency resource and a code domain resource (a random access preamble preamble); and sends a random access signal by using the random access resource, and the random access signal is also referred to as a message 1 (Msg 1).

3. After receiving the message 1 sent by the UE, the base station estimates a timing advance of the UE based on a preamble sent by a user, and returns a message 2 (Msg 2) to the user. The message 2 includes configuration information such as a time-frequency resource location and a modulation and coding scheme that are used by the UE to send a message 3 (Msg 3) for performing conflict resolution.

4. After receiving the message 2, the UE sends the message 3 on a corresponding time-frequency resource based on the configuration in the message 2.

5. After receiving the message 3, the base station returns a message 4 (Msg 4) to the user, indicating that the terminal user successfully performs access.

A procedure from the Msg 1 to the Msg 4 is usually referred to as a four-step random access procedure. In addition, sending of the random access preamble in the Msg 1 may be further applied to the contention-free random access and the two-step random access. The contention-free random access includes only the first two steps concerning the Msg 1 and the Msg 2. In addition, there is another type of two-step random access, where a message A and a message B are included. The message A includes sending of the random access preamble and first data information (for example, similar to the message 1 and the message 3 in the 4-step random access), and the message B includes contention resolution and uplink scheduling (for example, similar to the message 2 and the message 4 in the 4-step random access). The Msg 1, the Msg 3, and the Msg 4 may be retransmitted (after a failure occurs).

It can be learned from the foregoing descriptions of the random access procedure that the network device may send a broadcast signal, so that the terminal device sends a random access preamble to the network device based on the broadcast signal, to perform the random access procedure. Generally, an example in which the network device is a ground base station is used. Because the ground base station is fixed at a specific place on the ground, broadcast signals sent by the ground base station at different moments are stable signals. In other words, signal coverage areas corresponding to the broadcast signals are generally fixed at different moments. For the terminal device, when a received broadcast signal is good (for example, signal strength and/or signal quality is higher than a threshold), the terminal device determines to access a corresponding network device based on the broadcast signal.

Optionally, the terminal device further needs to determine, based on the broadcast signal, whether a cell corresponding to the broadcast signal is allowed to be accessed. For example, when a value of a cell barred (cellBarred) field in a master information block (master information block, MIB) corresponding to the broadcast signal is represented as not barred (notBarred), it indicates that the cell corresponding to the broadcast signal is allowed to be accessed. For another example, when the value of the cell barred (cellBarred) field in the master information block (master information block, MIB) corresponding to the broadcast signal is represented as barred (Barred), it indicates that the cell corresponding to the broadcast signal is not allowed to be accessed. In addition, the terminal device may further determine, based on other information, whether the terminal device can access the network device based on the broadcast signal. For ease of description, in the following example, it is assumed that if quality of a signal in a cell detected by the terminal device meets a preset requirement, the terminal device initiates access to a cell corresponding to the broadcast signal.

However, in a future communication network, the network device may no longer be fixed at a specific place on the ground. For example, the network device may be a device such as a satellite, an airplane, or an uncrewed aerial vehicle. In this case, due to movement (or vibration, jitter, or the like) of the network device, a signal coverage area corresponding to a broadcast signal sent by the network device may change at different moments. As a result, when the terminal device determines, at a previous moment, that a received broadcast signal is good, the broadcast signal received at a next moment may not be suitable for initiating access, and consequently a random access procedure failure is likely to occur.

In an implementation example, in a satellite communication scenario, there is an extremely large quantity of beams in a single cell, the single cell needs to scan an extremely large quantity of broadcast beams (there may be 400 to 700 beams), and a long scanning re-simulation interval (that is, a time interval at which a satellite illuminates a same direction again) may be in seconds. In addition, because there are quite many broadcast beams, weight update and storage overheads are excessively large. Therefore, a direction of a broadcast beam cannot be adjusted in real time based on a requirement, and a broadcast location can be adjusted only based on several preset locations. Actually, the broadcast beam moves with movement of a satellite. Before completing access, the satellite does not know a location of the terminal device, and can only complete an access procedure by using the direction of the broadcast beam.

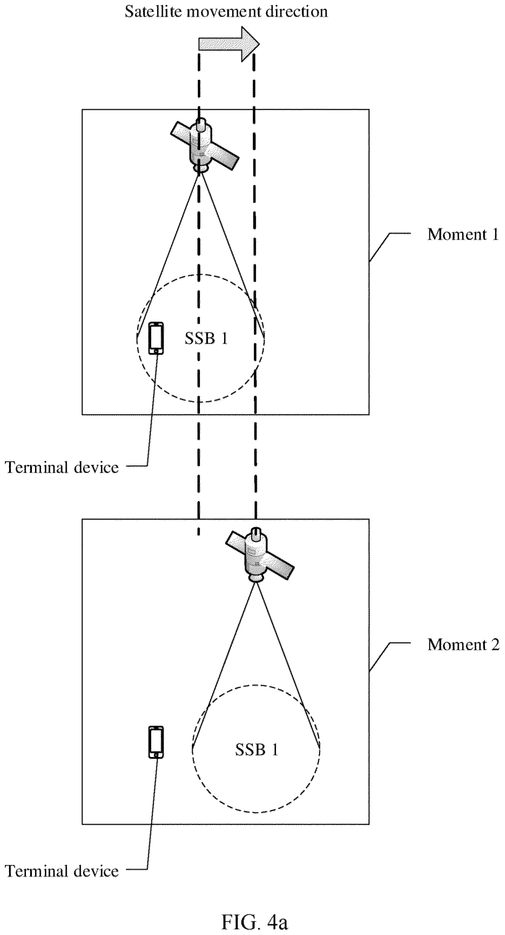

For example, as shown in FIG. 4a, an example in which the network device is a satellite, a broadcast signal of the satellite is an SSB 1, and a coverage area of the SSB 1 is a circle is used. It should be noted that the shape of the coverage area of the SSB may be an ellipse, a polygon, or the like, or the shape of the coverage area may be an irregular shape. This is not limited herein.

As shown in FIG. 4a, at a moment 1, a network device broadcasts an SSB 1 in a specific direction, and a terminal device is located in a signal coverage area of the SSB 1. When detecting that signal strength and/or signal quality of the SSB 1 is higher than a threshold, the terminal device determines that a random access procedure may be performed based on information included in the SSB 1. However, because a satellite may move relative to the ground, and there is a large difference between a moving speed of the satellite and a moving speed of the terminal device, the satellite has large displacement relative to the terminal device at a moment 2, and the satellite generally does not change a broadcast direction of the SSB 1 during moving. In this scenario, the SSB 1 is no longer suitable for initiating access at the moment 2 shown in FIG. 4a. If the terminal device initiates random access based on a signal detection result at the moment 1, a random access procedure failure is likely to occur.

In another implementation example, in a satellite communication scenario, a satellite may have a strong antenna capability, and can implement gaze coverage. However, because a beam direction discrete granularity (for example, a direction in a specific range is divided into several parts, each part represents a direction, and a difference between the directions is a granularity) is insufficient, a coverage area jitters. At different times, a beam that illuminates a predetermined position may jitter in a specific range, and consequently, an area that can be covered at a previous moment cannot be covered at a current moment.

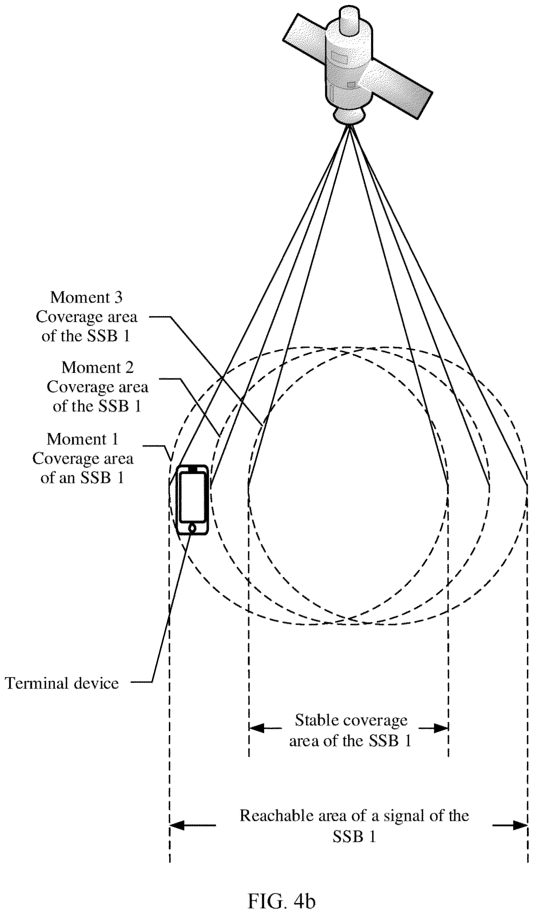

For example, as shown in FIG. 4b, an example in which the network device is a satellite, a broadcast signal of the satellite is an SSB 1, and a coverage area of the SSB 1 is a circle is used. It should be noted that the shape of the coverage area of the SSB may be an ellipse, a polygon, or the like, or the shape of the coverage area may be an irregular shape. This is not limited herein.

As shown in FIG. 4b, at the moment 1, the network device broadcasts an SSB 1 in a specific direction, and the terminal device is located in a signal coverage area of the SSB 1. When detecting that signal strength and/or signal quality of the SSB 1 is higher than a threshold, the terminal device determines that a random access procedure may be performed based on information included in the SSB 1. However, because the satellite may vibrate or jitter, even if the satellite does not change a broadcast direction of the SSB 1 and the satellite does not move relative to the ground, a coverage area of the SSB 1 may change at a moment 2 and a moment 3. It is clear that the SSB 1 is no longer suitable for initiating access at the moment 2 and the moment 3 shown in FIG. 4b. In other words, even if the terminal device is in a reachable area of a signal of the SSB 1, because of vibration or jitter of the satellite, a case in which the broadcast signal is not suitable for initiating access may occur. In this case, if the terminal device initiates random access based on the signal detection result at the moment 1, a random access procedure failure is likely to occur.

In conclusion, in a design of a current random access procedure, a characteristic that a broadcast beam moves and jitters with a satellite is not considered, and an effective access procedure cannot be supported. For example, because a broadcast beam moves with a satellite, a geometric feature of satellite coverage, and a longer access time caused by large-scale beam hopping, energy of several broadcast beams sensed by the terminal device is similar, and a broadcast beam whose signal quality meets a requirement is randomly accessed based on a design of the current random access procedure, and a coverage time of the accessed beam for the terminal device is randomly selected. If the terminal device is at an edge of a side opposite to a beam movement direction of the broadcast beam, or the terminal device does not initiate access in time after receiving a broadcast message, a beam corresponding to the broadcast message may no longer illuminate the terminal device in the access procedure, so that the access procedure of the terminal device is interrupted. For a gaze beam, because the beam may jitter, for a terminal device at a beam coverage edge, a problem that coverage vary greatly at different times may still occur, and consequently an access procedure is interrupted. In conclusion, even if the terminal device can currently detect a beam whose signal quality meets the requirement, the terminal device may not be suitable for initiating access.

Therefore, how to reduce occurrence of a random access failure is an urgent technical problem to be resolved. The following further describes a communication method and a communication apparatus provided in this application with reference to the accompanying drawings.

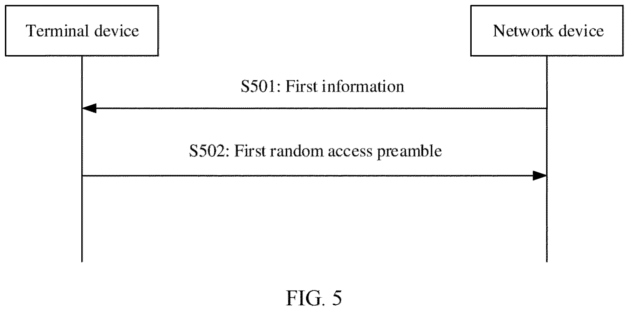

FIG. 5 is a schematic diagram of an implementation of a communication method according to this application. The method includes the following steps.

S501: A network device generates and sends first information.

In this embodiment, in step S501, the network device generates and sends the first information. Correspondingly, a terminal device receives the first information in step S501. The first information is used to determine an access range corresponding to a first signal.

In a possible implementation, the first information is located in a system information block (system information block, SIB).

Optionally, the first information may be a signal received and sent in a broadcast manner, and the first information may be further carried in another broadcast signal different from an SIB, for example, an MIB or another broadcast signal. This is not limited herein.

It should be noted that in any embodiment of this application, the access range may also be expressed as an accessible range, a range in which random access can be initiated, a coverage range, a spatial range, a geographical range, a signal (or beam) coverage range, an effective range of a signal (or beam), a stable coverage range of a signal (or beam), an access area, a spatial area, a geographical area, an accessible area, an area in which random access can be initiated, a coverage area, a coverage area of a signal (or beam), an effective area of a signal (or beam), a stable coverage area of a signal (or a beam), or the like.

In addition, in any embodiment of this application, the first signal (and a second signal, a third signal, n signals, and the like) may be a broadcast signal, for example, may be an SSB, or may be another signal used in a random access procedure. This is not limited herein.

S502: The terminal device sends a first random access preamble.

In this embodiment, if the terminal device determines that the terminal device is located in the access range after a first moment, the terminal device sends the first random access preamble in step S502. Correspondingly, the network device receives the first random access preamble in step S502. The first random access preamble is associated with the first signal.

In a possible implementation, the first information sent by the network device in step S501 includes at least one of the following: location information of the access range, movement information of the access range, a duration threshold between the first moment and a sending moment of the first information, a duration threshold between the first moment and a receiving moment of the first information, or the first moment. The first information that is sent by the network device and that is used to determine the access range corresponding to the first signal may be implemented in one of or a combination of the foregoing plurality of manners, to improve flexibility of the solution.

The following further describes the first information with reference to some implementation examples.
(1) The location information of the access range included in the first information may include at least one of the following: location information of one or more reference points, a distance threshold between the location information and the one or more reference points, coordinates of the access range relative to the network device, coordinates of the access range relative to the ground (for example, coordinates of an earth-fixed system), or coordinates of the access range relative to the earth (for example, coordinates of an earth-centered inertial system).

Optionally, when the first information includes the location information of the plurality of reference points and the distance threshold between the location information and the plurality of reference points, the access range (or referred to as coverage information) may be a union set of accessible regions described by each reference point and a corresponding distance threshold.

In an implementation example, the network device may explicitly notify the terminal device of the coverage information by using the first information in step S501, to implement access control of the terminal device at different beam locations. A coverage area and a moving track of a broadcast beam are explicitly notified to UE, and the coverage area is described in a plurality of forms.

For example, the location information of the access range included in the first information may include one or more of the following:
a geometric shape (for example, an ellipse, a circle, a polygon, or another regular or irregular pattern) of a beam coverage area, a location (and a timestamp) of a reference point in the geometric shape, a beam center direction and a field angle of a given antenna gain in different directions of the beam, a location (and a timestamp) of a satellite, and the like.

(2) The movement information of the access range included in the first information may include one or more of the following:
a motion direction of the geometric shape of the beam coverage area, a motion direction of the satellite, and the like.

(3) For the first moment related to the first information, the network device may notify the terminal device of the first moment by using the first information.

In a possible implementation, the first moment may be determined based on a second moment and a duration threshold. In other words, in time domain, the first moment is in a duration threshold after the second moment.

Optionally, the second moment may be a moment at which the terminal device sends a random access preamble, the receiving moment of the first information, the sending moment of the first information (for example, a timestamp carried in the first information), any moment between the sending moment of the first information and the receiving moment of the first information, a moment of preset duration before the receiving moment of the first information, a moment of preset duration after the receiving moment of the first information, a moment of preset duration before the sending moment of the first information, a moment of preset duration after the sending moment of the first information, or the like.

Optionally, the duration threshold is configured by the network device (for example, the first information includes the duration threshold) or preconfigured in the terminal device.

In a possible implementation, the first moment may be a receiving moment that is estimated by the terminal device and that is of information involved in a random access procedure, a sending moment that is estimated by the terminal device and that is of information involved in a random access procedure, and a moment that is estimated by the terminal device and at which the terminal device completes registration on a core network device.

In a possible implementation, the network device indicates, by using the first information, that the first moment is any one of the following:
a receiving moment that is estimated by the network device and that is of information involved in a random access procedure, a sending moment that is estimated by the network device and that is of information involved in a random access procedure, a moment that is estimated by the network device and at which the terminal device completes registration on a core network device, or the like.

Optionally, the information involved in the random access procedure includes a message 1 (MSG 1), a message 2 (MSG 2), a message 3 (MSG 3), a message 4 (MSG 4), and the like.

Optionally, the first moment is preconfigured in the terminal device.

Optionally, the terminal device obtains the first moment by using other information that is sent by the network device and that is different from the first information.

Based on the foregoing technical solution, in step S502, the terminal device calculates, based on the first information (including the coverage area (and the timestamp), a movement rule, an access-related time threshold (that is, access duration), and the like) sent by the network device, a coverage information status of a broadcast beam after a time threshold (for example, a time when access is completed or a time when a UE location can be known by a BS) following a reference time point (for example, a time when a preamble is initiated or a time when a broadcast beam signal is received). Further, it is determined whether the terminal device is still in effective coverage of the broadcast beam at the time when the access is completed. If the terminal device is still in the effective coverage of the broadcast beam, the terminal device initiates access in step S502. If the terminal device is not in the effective coverage of the broadcast beam, the terminal device does not initiate access in step S502.

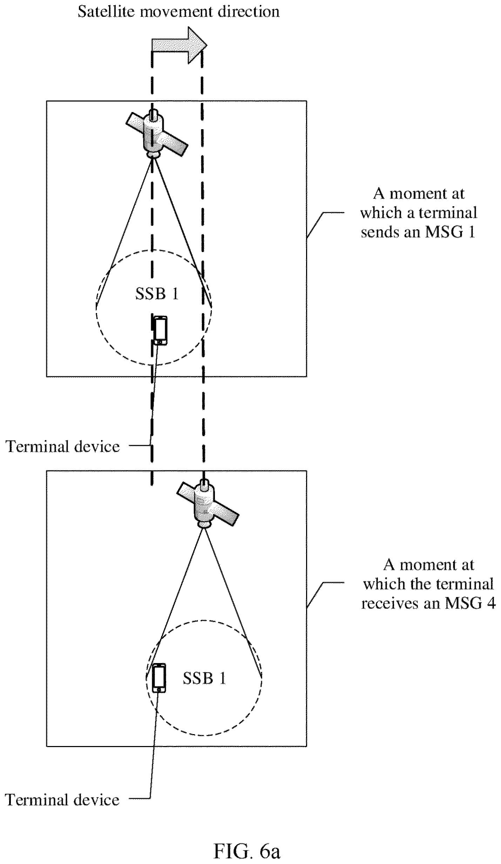

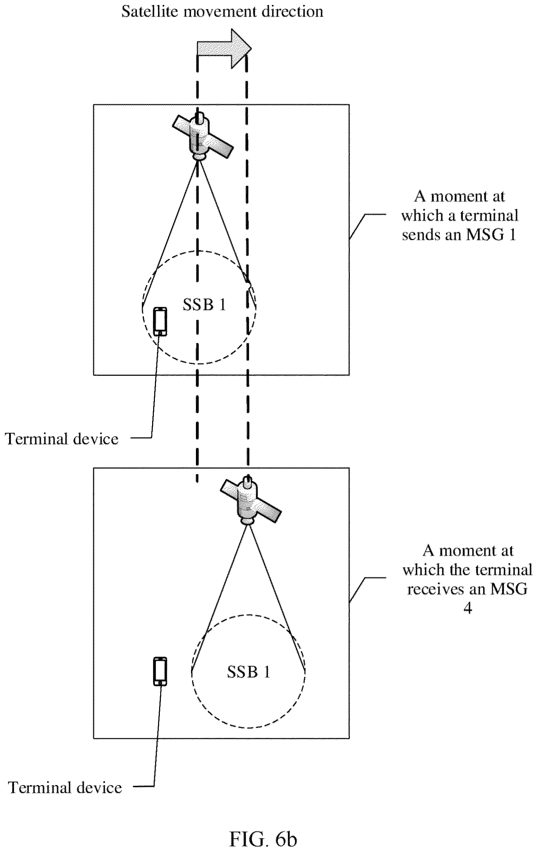

The following further describes the implementation procedure of step S502 with reference to scenario examples shown in FIG. 6a and FIG. 6b. Similar to FIG. 4a and FIG. 4b, an example in which the network device is a satellite, a broadcast signal of the satellite is an SSB 1, and a coverage area of the SSB 1 is a circle is used herein.

It should be noted that a shape of the coverage area of the SSB may be an ellipse, a polygon, or the like, or the shape of the coverage area may be an irregular shape. This is not limited herein. In addition, in the examples shown in FIG. 6a and FIG. 6b, an example in which the first moment is a difference between "the second moment (a moment at which the terminal device sends the MSG 1 is used as an example)" and the duration threshold is used for description.

The implementation scenario shown in FIG. 6a is an example of a scenario in which the terminal device determines to initiate access in step S502. In FIG. 6a, the terminal device is located in a middle area covered by a broadcast beam corresponding to the SSB 1. When the terminal device determines, based on the first information obtained in step S501, that at a time when access is completed, because the terminal device can still be located at a middle edge of the broadcast beam due to satellite motion, the terminal device can still successfully complete a random access procedure (that is, the terminal device determines that the MSG 4 can be successfully received before the duration threshold). In this case, in step S502, the terminal device sends, based on the SSB 1, the first random access preamble associated with the SSB 1, to perform the random access procedure.

The implementation scenario shown in FIG. 6b is an example of a scenario in which the terminal device determines not to initiate access in step S502. In FIG. 6a, the terminal device is located in an edge area covered by the broadcast beam corresponding to the SSB 1. When the terminal device determines, based on the first information obtained in step S501, that at a time when which access is completed, because the terminal device fails to locate in the coverage area of the broadcast beam due to satellite motion, the terminal device cannot complete the random access procedure (that is, the terminal device determines that the MSG 4 cannot be successfully received before the duration threshold). In this case, in step S502, the terminal device does not initiate random access.

It can be learned from the examples shown in FIG. 6a and FIG. 6b that, for a non-gaze broadcast beam, the broadcast beam corresponding to the first random access preamble sent by the terminal device in step S502 may be continuously covered by using content included in the first information, to ensure that the random access procedure is completed.

In addition, in some embodiments, a beam sent by the network device may be a gaze broadcast beam, that is, a location of the network device relative to the ground may be considered unchanged. In other words, the network device does not move, and therefore, a coverage area of a broadcast beam sent by the network device does not move due to movement of the network device. In this case, the coverage area of the broadcast beam sent by the network device may still change due to jitter or vibration of the network device. In this case, the first information sent by the network device in step S501 may not include "the moving information of the access range", to reduce signaling consumption.

In a possible implementation, the first information sent by the network device in step S501 includes identification information of a second signal, and a coverage area of the first signal overlaps a coverage area of the second signal. If it is detected that signal quality of the second signal is greater than a first threshold, the terminal device determines, in step S502, that the terminal device is located in the access range after the first moment.

Specifically, a signal coverage area of the broadcast signal sent by the network device may change due to movement of the network device. For the coverage area of the first signal, the coverage area of the second signal is located in a movement direction of the network device. Due to movement of the network device, the coverage area of the first signal is close to the coverage area of the second signal, and moves to the coverage area of the second signal. In other words, the coverage area of the first signal overlaps the coverage area of the second signal. Therefore, based on the identification information of the second signal included in the first information, when it is detected that the signal quality of the second signal is greater than the first threshold, the terminal device may determine that the terminal device is close to the coverage area of the second signal, that is, the terminal device may determine that the terminal device is located in the access range corresponding to the first signal after the first moment.

Optionally, the identification information of the second signal may also be expressed as index information of the second signal.

Optionally, if it is detected that the signal quality of the second signal is equal to the first threshold, the terminal device determines, in step S502, that the terminal device is located in the access range after the first moment; or if it is detected that the signal quality of the second signal is equal to the first threshold, the terminal device determines, in step S502, that the terminal device is not located in the access range after the first moment.

It should be noted that, in any embodiment of this application, the signal quality may include one or more of reference signal received power (reference signal received power, RSRP), reference signal received quality (reference signal received quality, RSRQ), or another parameter used to represent signal quality.

In a possible implementation, the first information sent by the network device in step S501 includes identification information of a third signal, and the coverage area of the first signal does not overlap a coverage area of the third signal. If it is detected that signal quality of the third signal is less than a second threshold, the terminal device determines, in step S502, that the terminal device is located in the access range after the first moment.

Specifically, a signal coverage area of the broadcast signal sent by the network device may change due to movement of the network device. For the coverage area of the first signal, the coverage area of the third signal is located in a direction opposite to the movement direction of the network device. Due to movement of the network device, the coverage area of the first signal is far away from the coverage area of the second signal. In other words, the coverage area of the first signal does not overlap the coverage area of the third signal. Therefore, based on the identification information of the third signal included in the first information, when it is detected that the signal quality of the third signal is less than a second threshold, the terminal device may determine that the terminal device is far away from the coverage area of the third signal, that is, the terminal device may determine that the terminal device is located in the access range corresponding to the first signal after the first moment.

Optionally, the identification information of the third signal may also be expressed as index information of the third signal.

Optionally, if it is detected that the signal quality of the third signal is equal to the second threshold, the terminal device determines, in step S502, that the terminal device is located in the access range after the first moment; or if it is detected that the signal quality of the third signal is equal to the second threshold, the terminal device determines, in step S502, that the terminal device is not located in the access range after the first moment.

Optionally, the first threshold is greater than the second threshold, or the first threshold is equal to the second threshold.

In a possible implementation, the first information sent by the network device in step S501 includes the identification information of the second signal and the identification information of the third signal, the coverage area of the first signal overlaps the coverage area of the second signal, and the coverage area of the third signal does not overlap the coverage area of the first signal. If it is detected that the signal quality of the second signal is less than a third threshold and the signal quality of the third signal is less than a fourth threshold, the terminal device determines, in step S502, that the terminal device is located in the access range after the first moment.

Specifically, a signal coverage area of the broadcast signal sent by the network device may change due to movement of the network device. For the coverage area of the first signal, the coverage area of the second signal is located in a movement direction of the network device, and the coverage area of the third signal is located in a direction opposite to the movement direction of the network device. Due to movement of the network device, the coverage area of the first signal is close to the coverage area of the second signal, and moves to the coverage area of the second signal, and the coverage area of the first signal is far away from the coverage area of the second signal. In other words, the coverage area of the first signal overlaps the coverage area of the second signal, and the coverage area of the first signal does not overlap the coverage area of the third signal. Therefore, based on the identification information of the second signal and the identification information of the third signal included in the first information, when it is detected that the signal quality of the second signal is less than the third threshold and the signal quality of the third signal is less than the fourth threshold, the terminal device may determine that a location of the terminal device is not close to the coverage area of the second signal nor the coverage area of the third signal. In other words, the terminal device determines, in step S502, that the location of the terminal device is located in a center area close to the coverage area of the first signal, that is, the terminal device may determine, in step S502, that the terminal device is located in the access range corresponding to the first signal after the first moment.

Optionally, if it is detected that the signal quality of the second signal is equal to the third threshold and the signal quality of the third signal is equal to the fourth threshold, the terminal device determines, in step S502, that the terminal device is located in the access range after the first moment.

Optionally, a value relationship between the third threshold and the fourth threshold is not limited in this application. For example, the third threshold may be greater than the fourth threshold, the third threshold may be equal to the fourth threshold, or the third threshold may be less than the fourth threshold.

It can be learned from the solution in which the first information includes the identification information of the second signal and/or the identification information of the third signal, that the network device notifies the terminal device of adjacent beam information of a broadcast beam, to implicitly implement access control on the terminal device at different beam locations.

Specifically, the network device configures, for the terminal device based on the first information sent in step S501, a set that represents a beam that can be accessed by the terminal device (a satellite motion direction broadcast beam) and a beam that cannot be accessed by the terminal device (a satellite motion reverse direction broadcast beam). For example, when the terminal device detects a beam in a satellite motion reverse direction broadcast beam set, it indicates that the broadcast beam has reached a coverage edge, and the terminal device does not initiate access in step S502. When the terminal device detects a beam in a satellite motion direction broadcast beam set, it indicates that the broadcast beam just starts, and the terminal device may initiate access in step S502.

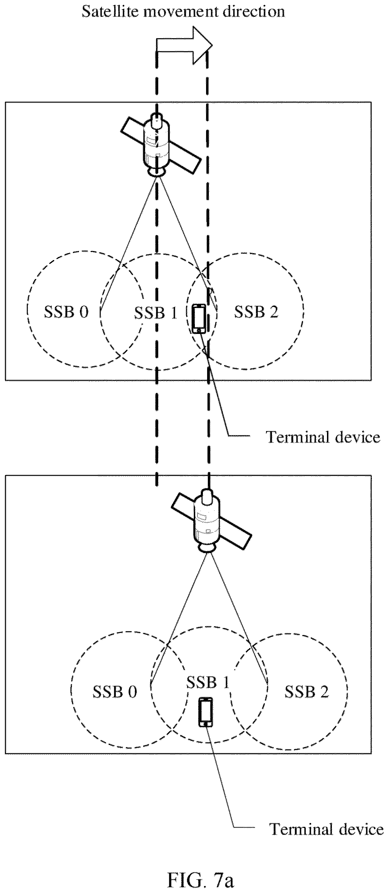

The following further describes the implementation procedure of step S502 with reference to implementation scenarios shown in FIG. 7a to FIG. 7c. Similar to FIG. 4a and FIG. 4b, an example in which the network device is a satellite, broadcast signals of the satellite are an SSB 0 to an SSB 2, and coverage areas of the SSB 0 to SSB 2 are circles is used herein.

It should be noted that a shape of the coverage area of the SSB may be an ellipse, a polygon, or the like, or the shape of the coverage area may be an irregular shape. This is not limited herein.

The implementation scenario shown in FIG. 7a is an example of a scenario in which the terminal device determines, in step S502, to initiate access. In FIG. 7a, the network device configures, for the SSB 1 in the first information, an accessible adjacent broadcast beam, that is, the SSB 2. (Optionally, the first information further includes an inaccessible adjacent broadcast beam, namely, the SSB 0). The terminal device detects that signal quality of the SSB 1 and the SSB 2 is greater than the threshold and signal quality of the SSB 0 is less than the threshold, where the SSB 2 is an adjacent broadcast beam of the SSB 1 in a satellite motion direction. This indicates that coverage of the SSB 1 just starts, and determines that access can be initiated. In this case, in step S502, the terminal device sends, based on the SSB 1, the first random access preamble associated with the SSB 1, to perform the random access procedure.

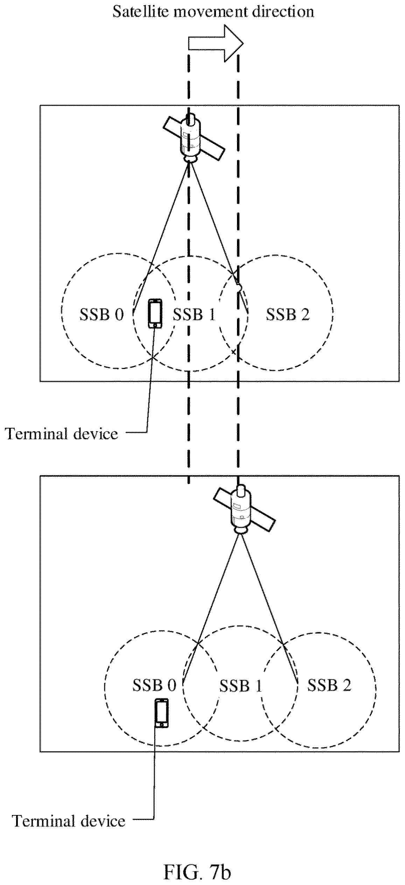

The implementation scenario shown in FIG. 7b is an example of a scenario in which the terminal device determines not to initiate access in step S502. In FIG. 7b, the network device configures, for the SSB 1 in the first information, an inaccessible adjacent broadcast beam, that is, the SSB 0. (Optionally, the first information further includes the accessible adjacent broadcast beam, that is, the SSB 2). The terminal device detects that signal quality of the SSB 0 and the SSB 1 is greater than the threshold and signal quality of the SSB 2 is less than the threshold, where the SSB 0 is a satellite motion reverse broadcast beam of the SSB 1. This indicates that coverage of the SSB 1 is about to end, and the terminal device determines not to initiate access. In this case, in step S502, the terminal device does not initiate the random access procedure based on the SSB 1.

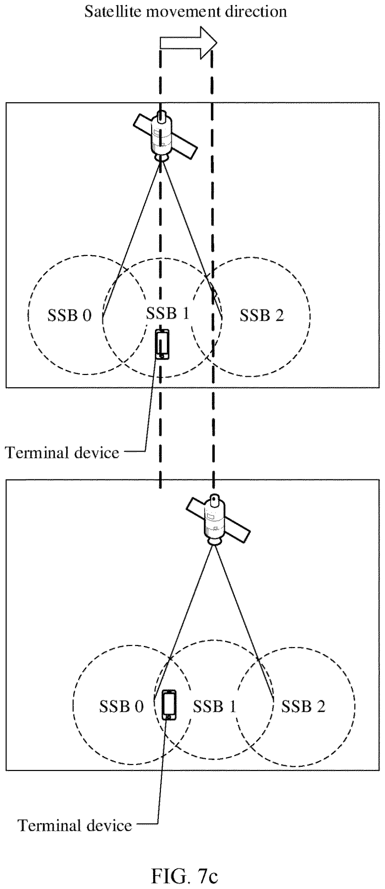

The implementation scenario shown in FIG. 7c is an example of a scenario in which the terminal device determines not to initiate access in step S502. In FIG. 7b, the network device configures, for the SSB 1 in the first information, an inaccessible adjacent broadcast beam, that is, the SSB 0. The first information further includes an accessible adjacent broadcast beam, that is, the SSB 2. The terminal device detects that signal quality of the SSB 1 is greater than the threshold and signal quality of the SSB 0 and the SSB 2 is less than the threshold. The SSB 0 is a satellite motion reverse broadcast beam of the SSB 1, and the SSB 2 is an adjacent broadcast beam of the SSB 1 in a satellite motion direction. This indicates that coverage of the SSB 1 is stable, and the terminal device determines to initiate access. In this case, in step S502, the terminal device sends, based on the SSB 1, the first random access preamble associated with the SSB 1, to perform the random access procedure.

It can be learned from the foregoing descriptions that the first information includes the identification information of the second signal, and the coverage area of the first signal overlaps the coverage area of the second signal; and/or the first information includes the identification information of the third signal, and the coverage area of the third signal does not overlap the coverage area of the first signal. There may be a plurality of relationships between a plurality of signals and the network device that sends the first information in step S501. The following further describes the relationships with reference to some examples.

In an implementation example, the first signal, the second signal, and the third signal may all be signals sent by the network device. In this case, before step S501, the network device may determine, based on control of the network device on transmission manners of different signals, whether coverage areas of the different signals overlap. Further, before step S501, the network device may generate, based on a determining result of "determining whether coverage areas of the different signals overlap", the first information sent in step S501. Therefore, the first information sent by the network device in step S501 may be information locally generated by the network device, so that the network device can generate the first information without information exchange, thereby reducing overheads.

In another implementation example, at least one of the first signal, the second signal, and the third signal is not a signal sent by the network device. In this case, before step S501, the network device may determine, based on an indication of another network device, whether the coverage areas of the different signals overlap. Further, before step S501, the network device may generate, based on the determining result of "determining whether coverage areas of the different signals overlap", the first information sent in step S501.

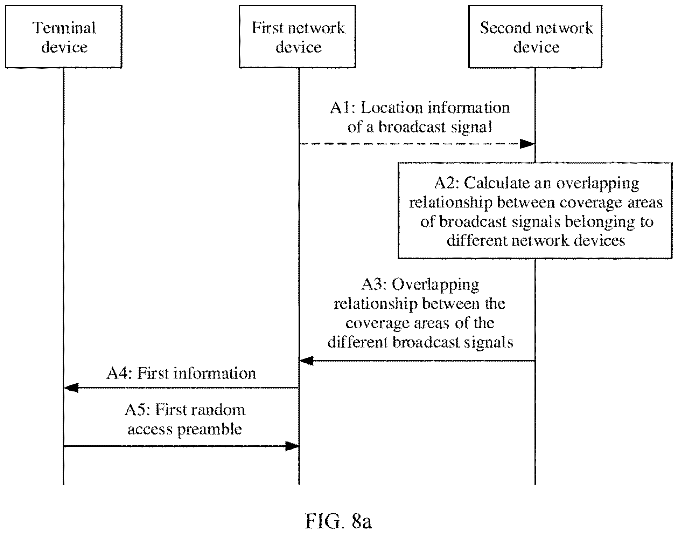

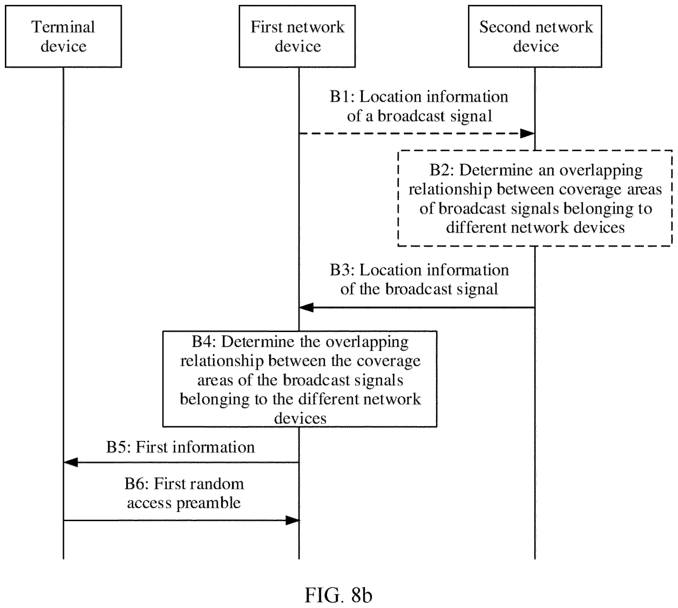

For ease of description, herein, the network device that sends the first information in step S501 is denoted as a first network device, and the another network device is denoted as a second network device. The second network device may be a core network device, a network management network element, another access network device, a gateway station, or the like. The following further describes with reference to examples shown in FIG. 8a and FIG. 8b.

For example, as shown in FIG. 8a, an example in which the second network device is a network management network element is used. For a procedure in which the first network device sends the first information in step A4 and a procedure in which the terminal device sends the first random access preamble in step A5, refer to the implementation procedures of step S501 and step S502, to implement corresponding technical effects. For details, refer to the foregoing descriptions. Details are not described herein again.

In FIG. 8a, before step A4, the method further includes the following.

Step A1: The first network device sends location information of a broadcast signal, and correspondingly, the second network device receives the location information of the broadcast signal.

Step A2: The second network device calculates, based on location information of broadcast signals sent by a plurality of network devices (including the first network device), an overlapping relationship between coverage areas of broadcast signals belonging to different network devices.

Step A3: The second network device sends an overlapping relationship between coverage areas of different broadcast signals, and correspondingly, the first network device receives the overlapping relationship between the coverage areas of the different broadcast signals. The overlapping relationship between the coverage areas of the different broadcast signals includes an overlapping relationship between the coverage area of the first signal and the coverage area of the second signal, and/or the overlapping relationship between the coverage areas of the different broadcast signals includes an overlapping relationship between the coverage area of the first signal and the coverage area of the third signal, and/or the overlapping relationship between the coverage areas of the different broadcast signals includes an overlapping relationship between the coverage area of the second signal and the coverage area of the third signal.

Optionally, when none of the first signal, the second signal, and the third signal in the foregoing example is sent by the first network device, the first network device may not need to perform step A1. In other words, when the first network device may not send a broadcast signal, the first network device may not need to perform step A1.

Therefore, after the first network device receives, in step A3, the overlapping relationship between the coverage areas of the different broadcast signals sent by the second network device, the first network device may generate the first information based on the overlapping relationship between the coverage areas of the different broadcast signals, and send the first information to the terminal device in step A4.

For another example, as shown in FIG. 8b, that the another network device is another access network device (for example, another satellite) is used as an example. For a procedure in which the first network device sends the first information in step B5 and a procedure in which the terminal device sends the first random access preamble in step B6, refer to the implementation procedures of step S501 and step S502, to implement corresponding technical effects. For details, refer to the foregoing descriptions. Details are not described herein again.

In FIG. 8b, before step B5, the method further includes the following.

Step B 1: The first network device sends location information of a broadcast signal, and correspondingly, the second network device receives the location information of the broadcast signal.

Step B2: The second network device determines, based on the location information of the broadcast signal sent by the first network device, an overlapping relationship between coverage areas of broadcast signals belonging to different network devices.

Optionally, when none of the first signal, the second signal, and the third signal in the foregoing example is sent by the first network device, the first network device may not need to perform step B 1. In other words, when the first network device may not send a broadcast signal, the first network device may not need to perform step B 1.

Optionally, when the first network device may send a broadcast signal, the first network device needs to perform step B 1, so that the second network device determines, in step B2, the overlapping relationship between the coverage areas of the broadcast signals belonging to the different network devices. Subsequently, the second network device may also be used as the network device in the example shown in FIG. 5, and perform corresponding steps, so that the second network device provides a service for the terminal device, and implements beneficial effects in the foregoing example.

Step B3: The second network device sends the location information of the broadcast signal, and correspondingly, the second network device receives the location information of the broadcast signal.

Step B4: The first network device determines, based on the location information of the broadcast signal sent by the second network device, the overlapping relationship between the coverage areas of the broadcast signals belonging to the different network devices.

In step B4, the overlapping relationship between the coverage areas of the different broadcast signals includes an overlapping relationship between the coverage area of the first signal and the coverage area of the second signal, and/or the overlapping relationship between the coverage areas of the different broadcast signals includes an overlapping relationship between the coverage area of the first signal and the coverage area of the third signal, and/or the overlapping relationship between the coverage areas of the different broadcast signals includes an overlapping relationship between the coverage area of the second signal and the coverage area of the third signal.

Therefore, after the first network device determines the overlapping relationship between the coverage areas of the different broadcast signals in step B4, the first network device may generate the first information based on the overlapping relationship between the coverage areas of the different broadcast signals, and send the first information to the terminal device in step B5.

In a possible implementation, the first random access preamble includes a random access preamble corresponding to the first signal. Specifically, the first random access preamble includes the random access preamble corresponding to the first signal. To be specific, when the terminal device determines that the terminal device is located in the access range corresponding to the first signal after the first moment, the terminal device sends the random access preamble corresponding to the first signal in step S502, so that the terminal device performs the random access procedure based on the first signal.

In a possible implementation, before step S502 in which the terminal device sends the first random access preamble, the method further includes: The network device sends first indication information, and correspondingly, the terminal device receives the first indication information. The first indication information indicates that the access range corresponding to the first signal includes at least two sub-ranges. The terminal device may further determine, based on the first indication information, that the terminal device is located in a target sub-range in the at least two sub-ranges.

Optionally, the first indication information and the first information sent in step S501 are carried in a same message, or the first indication information and the first information sent in step S501 may be carried in different messages. This is not limited herein.

Specifically, the first indication information received by the terminal device indicates that the access range corresponding to the first signal includes the at least two sub-ranges. When the terminal device sends the random access preamble corresponding to the first signal, if the access range corresponding to the first signal includes the at least two sub-ranges, the terminal device may determine, based on the first indication information, that the terminal device is located in the target sub-range in the at least two sub-ranges. In other words, the access range corresponding to the first signal may be divided into the at least two sub-ranges, so that the terminal device determines, based on the first indication information, a location of the terminal device in the at least two sub-ranges.

Optionally, the at least two sub-ranges may also be expressed as at least two sub-areas.

In a possible implementation, different sub-ranges in the at least two sub-ranges correspond to different random access preamble configuration information, and the first random access preamble is configured based on random access preamble configuration information corresponding to a target sub-range; or different sub-ranges in the at least two sub-ranges correspond to different resource information, and resource information carrying the first random access preamble corresponds to a target sub-range.

Specifically, the terminal device may indicate, to the network device by using the random access preamble configuration information of the first random access preamble or the resource information carrying the first random access preamble, the location of the terminal device in the at least two sub-ranges. Therefore, after the network device determines the location of the terminal device in the at least two sub-ranges, the network device may communicate with the terminal device based on the location by using a corresponding signal, so that the network device flexibly adjusts communication with the terminal device based on the location of the terminal device.

Optionally, the resource information includes time domain resource information and/or frequency domain resource information.

Optionally, the resource information further includes polarization information corresponding to the time domain resource information and/or the frequency domain resource information.

Specifically, in an implementation in which the terminal device indicates, to the network device by using the resource information carrying the first random access preamble, the location of the terminal device in the at least two sub-ranges, the terminal device may indicate, to the network device in the foregoing plurality of manners, the location of the terminal device in the at least two sub-ranges.

In an implementation example, a coverage area of a broadcast beam is divided into a plurality of areas, and different preamble groups initiate access by configuring different areas (or by using different resource information carrying preambles). The division principle is that other different broadcast beams are used to replace coverage in each area in the access procedure.

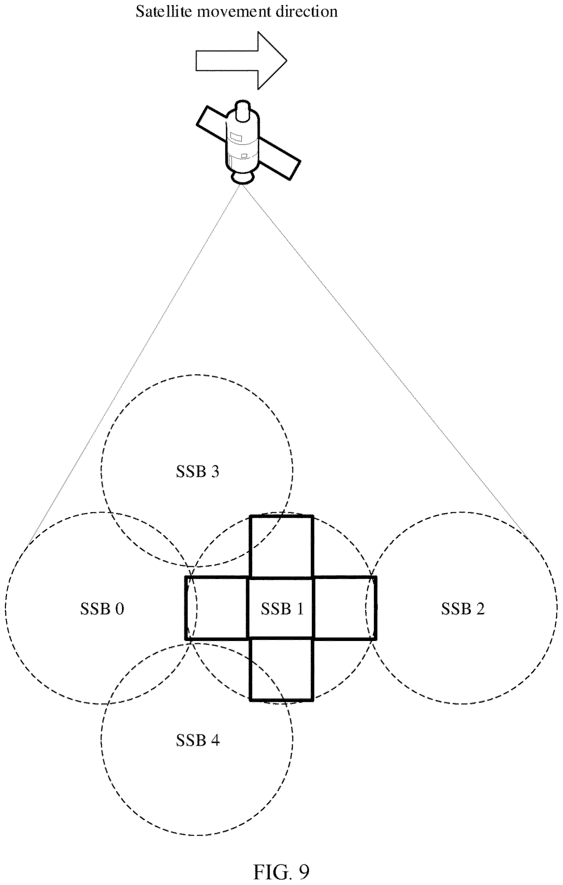

As shown in FIG. 9, an example in which the broadcast signal sent by the network device includes an SSB 0, an SSB 1, an SSB 2, an SSB 3, and an SSB 4 is used for description, and an example in which the first signal is the SSB 1 in the figure is used for description. The SSB 1 may be divided into five areas, as shown in the figure. The five areas are respectively a left-center area (denoted as an area 1), an upper-center area (denoted as an area 2), a lower-center area (denoted as an area 3), a right-center area (denoted as an area 4), and a center area (denoted as an area 5).

It should be understood that the figure is merely an implementation example. The SSB may be divided into other quantities of areas, for example, 2, 3, 4, 8, 16, 32, 64, or another value. This is not limited herein. In addition, in the figure, an implementation in which a signal coverage area of the SSB is a circle and shapes of different areas are rectangles is merely an implementation example. The shape may also be an ellipse, a polygon, or the like, or may be an irregular shape. This is not limited herein.

In the example shown in FIG. 9, the area 1, the area 2, and the area 3 in the SSB 1 that are far away from a satellite movement direction in the SSB 1 may leave coverage of the SSB 1 due to movement of a coverage area of the SSB 1 in an access procedure. The area 5 and the area 4 are in the middle of the SSB 1 and at an edge of the satellite movement direction, and are still covered by the SSB 1 in the access procedure. Therefore, in step S502, the terminal device may indicate, to the network device by using the random access preamble configuration information of the first random access preamble or the resource information carrying the first random access preamble, an area in which the terminal device is located in the SSB 1. Correspondingly, after step S502, the network device may determine, by using the preamble sent by the terminal device in step S502, an approximate location of the terminal device in a beam coverage area in which the first signal is located, to learn of a detection time and/or a detection frequency of a beam corresponding to subsequent information (for example, the MSG 2, the MSG 3, and/or the MSG 4) of an access procedure.

For example, herein, that the terminal device indicates, to the network device in step S502 by using the random access preamble configuration information of the first random access preamble, the area in which the terminal device is located in the SSB 1 is used as an example. It is a default case that the network device configures configuration information corresponding to a preamble group 1 used by terminal devices located in the area 4 and the area 5, and agrees with the terminal device in advance that a subsequent access step is performed by using a time-frequency location corresponding to the SSB 1. In the example shown in FIG. 9, a terminal device in the area 1 uses configuration information corresponding to a preamble group 2, and agrees with the terminal device that a subsequent access step is performed by using a time-frequency location corresponding to the SSB 0. A terminal device in the area 2 uses configuration information corresponding to a preamble group 3, and agrees with the terminal device that a subsequent access step is performed by using a time-frequency location corresponding to the SSB 3. A terminal device in the area 3 uses configuration information corresponding to a preamble group 4, and agrees with the terminal device that a subsequent access step is performed by using a time-frequency location corresponding to the SSB 4.

Similarly, the first indication information may also be notified to the terminal device in a broadcast manner, or may be agreed in advance (that is, preconfigured on the terminal device). For a divided area that is not suitable for access, it is still specified that the terminal device does not initiate access. In addition, for a manner of dividing different areas in the coverage area of the broadcast beam, an explicit manner or an implicit manner in the implementation procedures shown in FIG. 6a to FIG. 7c may be used. This is not limited herein.

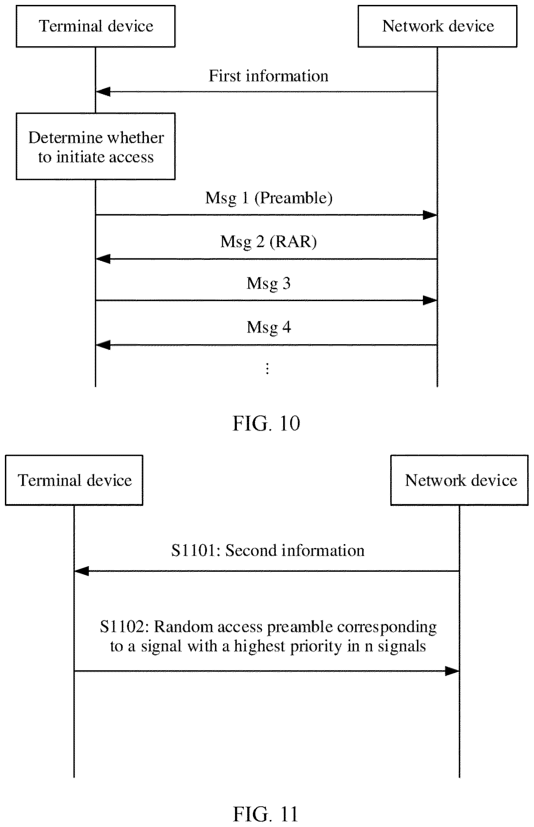

Optionally, based on the implementations shown in FIG. 5 to FIG. 9, the procedure shown in FIG. 3 may also be represented as an implementation procedure shown in FIG. 10. Specifically, before the random access procedure (that is, Msg 1 interaction), after the terminal device obtains the first information in step S501 based on the foregoing embodiment, the terminal device determines, based on the first information, whether to initiate access, and after the terminal device determines to initiate access, the terminal device sends the Msg 1 (that is, performs step S502), to perform a subsequent random access procedure.

Based on the foregoing technical solution, the first information obtained by the terminal device in step S501 is used to determine the access range corresponding to the first signal, and the terminal device may determine, based on the first information, whether the terminal device is in the access range after the first moment. When the terminal device determines that the terminal device is located in the access range after the first moment, the terminal device sends, in step S502, the first random access preamble associated with the first signal, to perform the random access procedure. In other words, the terminal device sends the first random access preamble associated with the first signal in step S502 only when the terminal device determines, in the random access procedure, that the terminal device is located in the access region of the first signal. Therefore, occurrence of a random access failure is reduced when a signal coverage area corresponding to a broadcast signal sent by the network device may change, so as to improve stability of a communication system.

FIG. 11 is another schematic diagram of a communication method according to this application. The method includes the following steps.

S1101: A network device generates and sends second information.

In this embodiment, the network device generates the second information, and sends the second information in step S1101. Correspondingly, a terminal device receives the second information in step S1101. The second information includes priorities of n signals, and n is an integer greater than 1.

S1102: The terminal device sends a random access preamble corresponding to a signal with the highest priority in the n signals.

In this embodiment, the terminal device sends, in step S1102, the random access preamble corresponding to the signal with the highest priority in the n signals. Correspondingly, the network device receives the random access preamble in step S1102.

Optionally, in step S1102, that the terminal device sends a random access preamble corresponding to a signal with the highest priority in the n signals includes: If the terminal device detects that signal quality of the n signals is greater than a threshold, the terminal device sends the random access preamble corresponding to the signal with the highest priority in the n signals.

Optionally, the network device generates the second information in step S1101 includes: The network device generates the second information based on movement information of the network device.

Specifically, the network device may generate the second information based on a signal coverage range of the n signals and the movement information of the network device. Due to movement of the network device, coverage areas of the n signals change. The network device may determine the coverage areas of the n signals based on the movement information of the network device, determine a signal in a movement direction of the network device as a high-priority signal indicated by the second information, and determine a signal in a direction opposite to the movement direction of the network device as a low-priority signal indicated by the second information. Therefore, when the terminal device sends, based on an indication of the network device, the random access preamble corresponding to the signal with the highest priority in the n signals, a signal corresponding to a random access preamble sent by the terminal device matches the movement direction of the network device, so as to reduce occurrence of a random access failure and improve stability of a communication system.

In a possible implementation, the n signals include a first signal, and priorities of the n signals include relative priorities of (n-1) signals in the n signals to the first signal.

Specifically, priorities that are of the n signals and that are indicated by the second information sent by the network device in step S1101 include the relative priorities of the (n-1) signals in the n signals to the first signal. In other words, the network device may indicate the priorities of the n signals in a relative priority manner. In addition, in an implementation in which the network device may indicate the priorities of the n signals in the relative priority manner, when the terminal device receives the first signal and any one or more of the (n-1) signals (the terminal device does not necessarily need to receive all the n signals), the terminal device may also determine, based on a relative priority indicated by the second information, a signal corresponding to a random access preamble to be sent.

Optionally, in step S 1102, that the terminal device sends a random access preamble corresponding to a signal with the highest priority in the n signals includes: If the terminal device detects that signal quality of the first signal in the n signals and signal quality of any one or more of the (n-1) signals are greater than a threshold, the terminal device sends the random access preamble corresponding to the signal with the highest priority in the n signals.

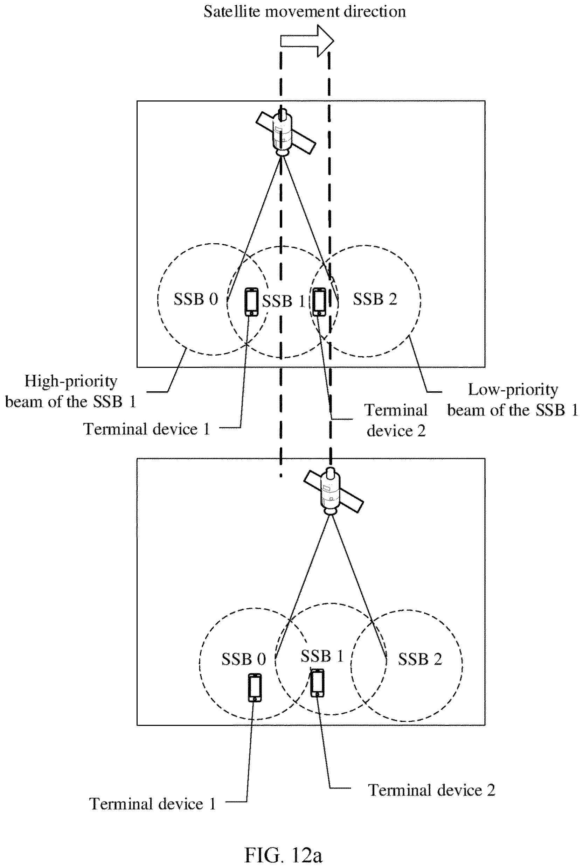

In the foregoing implementation procedure, the network device notifies, in step S1101, the terminal device of access priority information of a broadcast beam by using the second information. To be specific, the network device notifies the terminal device of access priority information of a surrounding broadcast beam that uses a current broadcast beam as a reference, and the terminal device selects a broadcast beam with a high priority from a broadcast beam list in which detected signal energy/quality is higher than the threshold, to initiate access. In an implementation example, the following further describes the foregoing solution with reference to an implementation scenario shown in FIG. 12a by using an example in which a value of n is 2.

As shown in FIG. 12a, the network device may configure, for an SSB 1 in the second information, that a high-priority broadcast beam of the SSB 1 is an SSB 0, and a low-priority broadcast beam of the SSB 1 is an SSB 2. In other words, the network device may indicate, in the second information, that a priority of the SSB 0 is higher than a priority of the SSB 1, and indicate that a priority of the SSB 2 is higher than a priority of the SSB 0.

For a terminal device 1, signal quality of the SSB 0 and the SSB 1 that may be received by the terminal device 1 is greater than the threshold. In this case, the terminal device 1 may determine to send the random access preamble by using a signal (namely, the SSB 0) with a higher priority in step S102, so as to reduce a random access failure of the terminal device caused by movement of the network device, and improve stability of the communication system.

For a terminal device 2, signal quality of the SSB 1 and the SSB 2 that may be received by the terminal device 2 is greater than the threshold. In this case, the terminal device 1 may determine to send the random access preamble by using a signal (namely, the SSB 1) with a higher priority in step S102, so as to reduce a random access failure of the terminal device caused by movement of the network device, and improve stability of the communication system.

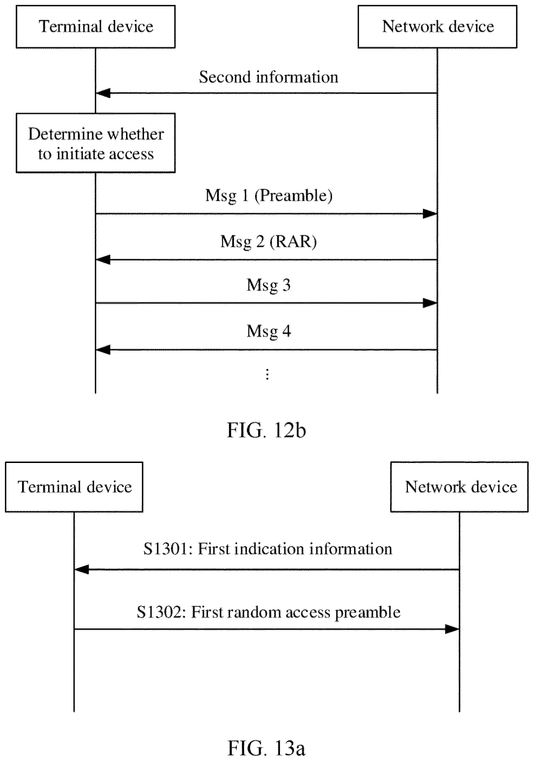

Optionally, based on the implementations shown in FIG. 11 and FIG. 12a, the procedure shown in FIG. 3 may also be represented as an implementation procedure shown in FIG. 12b. Specifically, before the random access procedure (that is, Msg 1 interaction), after the terminal device obtains the second information in step S1101 based on the foregoing embodiment, the terminal device determines, based on the second information, whether to initiate access, and after the terminal device determines to initiate access, the terminal device sends the Msg 1 (that is, performs step S1102), to perform a subsequent random access procedure.

Based on the foregoing technical solution, the second information received by the terminal device in step S1101 includes the priorities of the n signals. Then, when the terminal device receives the n signals, the terminal device sends, in step S1102, the random access preamble corresponding to the signal with the highest priority in the n signals. When a signal coverage area corresponding to a broadcast signal sent by the network device may change, the terminal device may be located in a coverage range of the n signals. In other words, the terminal device may receive the n signals. Then, the terminal device sends, based on the priorities of the n signals indicated by the second information, the random access preamble corresponding to the signal with the highest priority in the n signals. Therefore, compared with that of an implementation in which the signal coverage area corresponding to the broadcast signal sent by the network device may change and the terminal device may randomly select a signal from the n signals after receiving the n signals to send a random access preamble, the terminal device sends, based on an indication of the network device, the random access preamble corresponding to the signal with the highest priority in the n signals, so that the terminal device performs a random access procedure based on a priority indication of the network device, thereby reducing occurrence of a random access failure, so as to improve stability of the communication system.

FIG. 13a is another schematic diagram of a communication method according to this application. The method includes the following steps.

S1301: A network device generates and sends first indication information.

In this embodiment, the network device generates the first indication information, and the network device sends the first indication information in step S1301. Correspondingly, the terminal device receives the first indication information in step S1301. The first indication information indicates at least two sub-ranges in an access range corresponding to a first signal.

S1302: The terminal device sends a first random access preamble.

In this embodiment, the terminal device sends the first random access preamble in step S1302. Correspondingly, the network device receives the first random access preamble in step S1302.

In a possible implementation, resource information includes time domain resource information and/or frequency domain resource information. Optionally, the resource information further includes polarization information corresponding to the time domain resource information and/or the frequency domain resource information.

Specifically, in an implementation in which the terminal device indicates, to the network device by using resource information carrying the first random access preamble, a location of the terminal device in the at least two sub-ranges, the terminal device may indicate, to the network device in the foregoing plurality of manners, the location of the terminal device in the at least two sub-ranges.

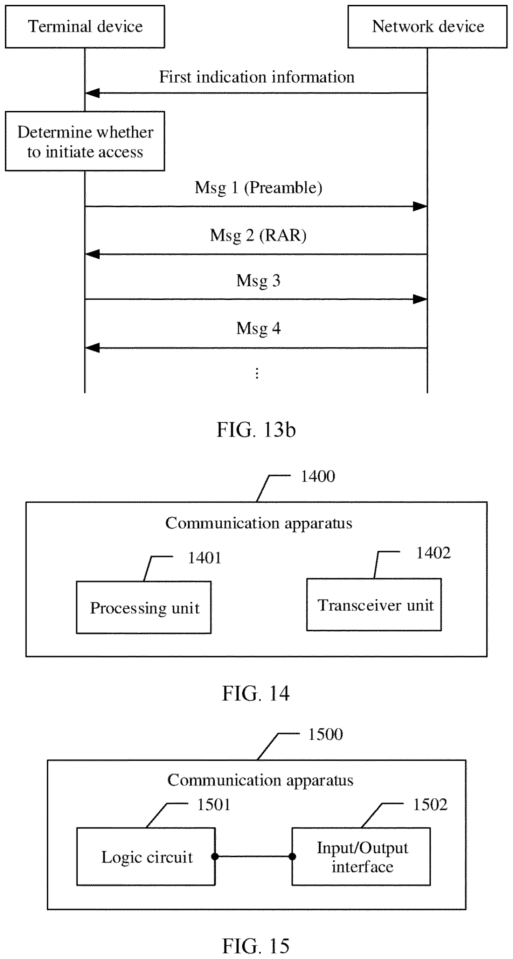

Optionally, based on the implementation shown in FIG. 13a, the procedure shown in FIG. 3 may also be represented as an implementation procedure shown in FIG. 13b. Specifically, before the random access procedure (that is, Msg 1 interaction), after the terminal device obtains the first indication information in step S1301 based on the foregoing embodiment, the terminal device determines, based on the first indication information, whether to initiate access, and after the terminal device determines to initiate access, the terminal device sends the Msg 1 (that is, performs step S1302), to perform a subsequent random access procedure.

Based on the foregoing technical solution, the first indication information received by the terminal device in step S1301 to indicates that the access range corresponding to the first signal includes the at least two sub-ranges. When the terminal device sends a random access preamble corresponding to the first signal, if the access range corresponding to the first signal includes the at least two sub-ranges, the terminal device may determine, based on the first indication information, that the terminal device is located in a target sub-range in the at least two sub-ranges. In other words, the access range corresponding to the first signal may be divided into the at least two sub-ranges, so that the terminal device determines, based on the first indication information, the location of the terminal device in the at least two sub-ranges. In addition, the terminal device may indicate, to the network device by using random access preamble configuration information of a first random access preamble or resource information carrying the first random access preamble that is sent in step S1302, the location of the terminal device in the at least two sub-ranges. Therefore, after the network device determines the location of the terminal device in the at least two sub-ranges, the network device may communicate with the terminal device based on the location by using a corresponding signal, so that the network device flexibly adjusts communication with the terminal device based on the location of the terminal device.

It should be noted that, for an implementation procedure of the first indication information, refer to the description of the first indication information in the implementations shown in FIG. 6a to FIG. 7c, to implement a corresponding technical effect. Details are not described herein again.

Refer to FIG. 14. An embodiment of this application provides a communication apparatus 1400. The communication apparatus 1400 can implement functions of the terminal device (or the network device) in the foregoing method embodiment, and therefore can also implement beneficial effects of the foregoing method embodiment. In this embodiment of this application, the communication apparatus 1400 may be a terminal device (or a network device), or may be an integrated circuit or an element, such as a chip, in a terminal device (or a network device). In the following embodiments, an example in which the communication apparatus 1400 is a terminal device or a network device is used for description.

In a possible implementation, when the apparatus 1400 is configured to perform the method performed by the terminal device in any one of the foregoing embodiments, the apparatus 1400 includes a processing unit 1401 and a transceiver unit 1402.

The transceiver unit 1402 is configured to obtain first information. The first information is used to determine an access range corresponding to a first signal.

If the processing unit 1401 determines that the communication apparatus is located in the access range after a first moment, the transceiver unit 1402 sends a first random access preamble. The first random access preamble is associated with the first signal.

In a possible implementation, the first information includes at least one of the following:
location information of the access range, movement information of the access range, a duration threshold between the first moment and a sending moment of the first information, a duration threshold between the first moment and a receiving moment of the first information, or the first moment.

In a possible implementation, the first information includes identification information of a second signal, and a coverage area of the first signal overlaps a coverage area of the second signal.

If it is detected that signal quality of the second signal is greater than a first threshold, the processing unit 1401 determines that the communication apparatus is located in the access range after the first moment.

In a possible implementation, the first information includes identification information of a third signal, and the coverage area of the first signal does not overlap a coverage area of the third signal.

If it is detected that the signal quality of the third signal is less than a second threshold, the processing unit 1401 determines that the communication apparatus is located in the access range after the first moment.

In a possible implementation, the first information includes the identification information of the second signal and the identification information of the third signal, the coverage area of the first signal overlaps the coverage area of the second signal, and the coverage area of the third signal does not overlap the coverage area of the first signal.

If it is detected that the signal quality of the second signal is less than a third threshold and the signal quality of the third signal is less than a fourth threshold, the processing unit 1401 determines that the communication apparatus is located in the access range after the first moment.

In a possible implementation, the first random access preamble includes a random access preamble corresponding to the first signal.

In a possible implementation, the receiving unit is further configured to receive first indication information. The first indication information indicates that the access range corresponding to the first signal includes at least two sub-ranges.

The processing unit 1401 is further configured to determine, based on the first indication information, that the communication apparatus is located in a target sub-range in the at least two sub-ranges.

In a possible implementation, when the apparatus 1400 is configured to perform the method performed by the network device in any one of the foregoing embodiments, the apparatus 1400 includes a processing unit 1401 and a transceiver unit 1402.

The processing unit 1401 is configured to generate first information. The first information is used to determine an access range corresponding to a first signal.

The transceiver unit 1402 is configured to send the first information.

If the communication apparatus is located in the access range after a first moment, the transceiver unit 1402 is further configured to receive a first random access preamble. The first random access preamble is associated with the first signal.

In a possible implementation, the first information includes at least one of the following:
location information of the access range, movement information of the access range, a duration threshold between the first moment and a sending moment of the first information, a duration threshold between the first moment and a receiving moment of the first information, or the first moment.

In a possible implementation, the first information includes identification information of a second signal, and a coverage area of the first signal overlaps a coverage area of the second signal.

In a possible implementation, the first information includes identification information of a third signal, and the coverage area of the first signal does not overlap a coverage area of the third signal.

In a possible implementation, the transceiver unit 1402 is further configured to receive the first random access preamble. The first random access preamble is associated with the first signal.

In a possible implementation, the first random access preamble includes a random access preamble corresponding to the first signal.

In a possible implementation, the transceiver unit 1402 is further configured to send first indication information. The first indication information indicates that the access range corresponding to the first signal includes at least two sub-ranges.

In a possible implementation, different sub-ranges in the at least two sub-ranges correspond to different random access preamble configuration information, and the first random access preamble is configured based on random access preamble configuration information corresponding to a target sub-range.

Alternatively, different sub-ranges in the at least two sub-ranges correspond to different time-frequency resources, and a time-frequency resource carrying the first random access preamble corresponds to a target sub-range.

In a possible implementation, when the apparatus 1400 is configured to perform the method performed by the terminal device in any one of the foregoing embodiments, the apparatus 1400 includes a processing unit 1401 and a transceiver unit 1402.

The transceiver unit 1402 is configured to receive second information. The second information includes priorities of n signals, and n is an integer greater than 1.

The processing unit 1401 is configured to determine a random access preamble corresponding to a signal with the highest priority in the n signals.

The transceiver unit 1402 is further configured to send the random access preamble corresponding to the signal with the highest priority in the n signals.

In a possible implementation, the network device receives the random access preamble corresponding to the signal with the highest priority in the n signals.

In a possible implementation, the n signals include a first signal.

The priorities of the n signals include relative priorities of (n-1) signals in the n signals to the first signal.

In a possible implementation, when the apparatus 1400 is configured to perform the method performed by the network device in any one of the foregoing embodiments, the apparatus 1400 includes a processing unit 1401 and a transceiver unit 1402.

The processing unit 1401 is configured to generate second information. The second information includes priorities of n signals, and n is an integer greater than 1.

The transceiver unit 1402 is configured to send the first information.

In a possible implementation, the network device receives a random access preamble corresponding to a signal with the highest priority in the n signals.

In a possible implementation, the n signals include a first signal.

The priorities of the n signals include relative priorities of (n-1) signals in the n signals to the first signal.

In a possible implementation, when the apparatus 1400 is configured to perform the method performed by the terminal device in any one of the foregoing embodiments, the apparatus 1400 includes a processing unit 1401 and a transceiver unit 1402.

The transceiver unit 1402 is configured to receive first indication information. The first indication information indicates at least two sub-ranges of an access range corresponding to a first signal.

The processing unit 1401 is configured to determine a first random access preamble.

The transceiver unit 1402 is further configured to send the first random access preamble.

Different sub-ranges in the at least two sub-ranges correspond to different random access preamble configuration information, and the first random access preamble is configured based on random access preamble configuration information corresponding to a target sub-range.

Alternatively, different sub-ranges in the at least two sub-ranges correspond to different resource information, and resource information carrying the first random access preamble corresponds to a target sub-range.

In a possible implementation, the resource information includes time domain resource information and/or frequency domain resource information.

In a possible implementation, the resource information further includes polarization information corresponding to the time domain resource information and/or the frequency domain resource information.

In a possible implementation, when the apparatus 1400 is configured to perform the method performed by the network device in any one of the foregoing embodiments, the apparatus 1400 includes a processing unit 1401 and a transceiver unit 1402.

The processing unit 1401 is configured to determine first indication information. The first indication information indicates at least two sub-ranges of an access range corresponding to a first signal.

The transceiver unit 1402 is configured to send the first indication information.

The transceiver unit 1402 is further configured to receive a first random access preamble.

Different sub-ranges in the at least two sub-ranges correspond to different random access preamble configuration information, and the first random access preamble is configured based on random access preamble configuration information corresponding to a target sub-range.

Alternatively, different sub-ranges in the at least two sub-ranges correspond to different resource information, and resource information carrying the first random access preamble corresponds to a target sub-range.

In a possible implementation, the resource information includes time domain resource information and/or frequency domain resource information.

In a possible implementation, the resource information further includes polarization information corresponding to the time domain resource information and/or the frequency domain resource information.

It should be noted that, for content such as an information execution procedure of the units in the communication apparatus 1400, refer to the descriptions in the foregoing method embodiments of this application. Details are not described herein again.

FIG. 15 is another schematic diagram of a structure of a communication apparatus 1500 according to this application. The communication apparatus 1500 at least includes an input/output interface 1502. The communication apparatus 1500 may be a chip or an integrated circuit.

Optionally, the communication apparatus further includes a logic circuit 1501.

The transceiver unit 1402 shown in FIG. 14 may be a communication interface. The communication interface may be the input/output interface 1502 in FIG. 15. The input/output interface 1502 may include an input interface and an output interface. Alternatively, the communication interface may be a transceiver circuit, and the transceiver circuit may include an input interface circuit and an output interface circuit.

Optionally, the input/output interface 1502 is configured to obtain first information. The first information is used to determine an access range corresponding to a first signal. The logic circuit 1501 is configured to determine that a terminal device is located in the access range after a first moment. The input/output interface 1502 is further configured to send a first random access preamble. The first random access preamble is associated with the first signal. The logic circuit 1501 and the input/output interface 1502 may further perform other steps performed by the terminal device in any one of the foregoing embodiments, and implement corresponding beneficial effects. Details are not described herein again.

Optionally, the logic circuit 1501 is configured to generate the first information. The first information is used to determine the access range corresponding to the first signal. The input/output interface 1502 is configured to send the first information. The input/output interface 1502 may be further configured to receive the first random access preamble. The first random access preamble is associated with the first signal. The logic circuit 1501 and the input/output interface 1502 may further perform other steps performed by the network device in any embodiment, and implement corresponding beneficial effects. Details are not described herein again.

In a possible implementation, the processing unit 1401 shown in FIG. 14 may be the logic circuit 1501 in FIG. 15.

Optionally, the logic circuit 1501 may be a processing apparatus, and some or all functions of the processing apparatus may be implemented by software. Some or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate arrays, FPGAs), an application-specific integrated circuit (application-specific integrated circuit, ASIC), a system on chip (system on chip, SoC), a central processor unit (central processor unit, CPU), a network processor (network processor, NP), a digital signal processor (digital signal processor, DSP), a micro controller unit (micro controller unit, MCU), a programmable logic device (programmable logic device, PLD), or another integrated chip, or any combination of the foregoing chips or processors.

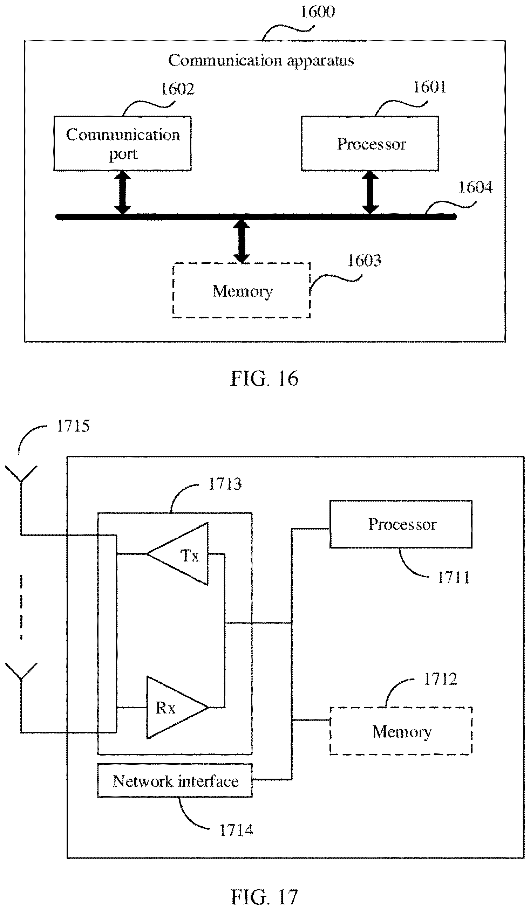

FIG. 16 shows a communication apparatus 1600 in the foregoing embodiment according to an embodiment of this application. The communication apparatus 1600 may be specifically the communication apparatus used as the terminal device in the foregoing embodiment. An example shown in FIG. 16 is that the terminal device is implemented by using a terminal device (or a component in the terminal device).

In a possible schematic diagram of a logical structure of the communication apparatus 1600, the communication apparatus 1600 may include but is not limited to at least one processor 1601 and a communication port 1602.

Further, optionally, the apparatus may include at least one of a memory 1603 and a bus 1604. In this embodiment of this application, the at least one processor 1601 is configured to perform control processing on an action of the communication apparatus 1600.

In addition, the processor 1601 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. A person skilled in the art may clearly understand that, for the purpose of convenient and brief description, for detailed working procedures of the foregoing system, apparatus, and unit, refer to corresponding procedures in the foregoing method embodiments. Details are not described herein again.

It should be noted that, the communication apparatus 1600 shown in FIG. 16 may be specifically configured to implement steps implemented by the terminal device in the foregoing method embodiments, and implement technical effects corresponding to the terminal device. For a specific implementation of the communication apparatus shown in FIG. 16, refer to the descriptions in the foregoing method embodiments. Details are not described herein again.

FIG. 17 is a schematic diagram of a structure of a communication apparatus 1700 in the foregoing embodiment according to an embodiment of this application. The communication apparatus 1700 may be specifically the communication apparatus used as the network device in the foregoing embodiment. An example shown in FIG. 17 is that the network device is implemented by using the network device (or a component in the network device). For a structure of the communication apparatus, refer to the structure shown in FIG. 17.

The communication apparatus 1700 includes at least one processor 1711 and at least one network interface 1714. Further, optionally, the communication apparatus further includes at least one memory 1712, at least one transceiver 1713, and one or more antennas 1715. The processor 1711, the memory 1712, the transceiver 1713, and the network interface 1714 are connected to each other, for example, through a bus. In this embodiment of this application, the connection may include various types of interfaces, transmission lines, buses, or the like. This is not limited in this embodiment. The antenna 1715 is connected to the transceiver 1713. The network interface 1714 is configured to enable the communication apparatus to communicate with another communication device through a communication link. For example, the network interface 1714 may include a network interface between the communication apparatus and a core network device, for example, an S1 interface. The network interface may include a network interface between the communication apparatus and another communication apparatus (for example, another network device or core network device), for example, an X2 or Xn interface.

The processor 1711 is mainly configured to: process a communication protocol and communication data; control the entire communication apparatus; execute a software program; and process data of the software program. For example, the processor 1711 is configured to support the communication apparatus in performing the actions in embodiments. The communication apparatus may include a baseband processor and a central processing unit. The baseband processor is mainly configured to process the communication protocol and the communication data. The central processing unit is mainly configured to control an entire terminal device, execute the software program, and process the data of the software program. Functions of the baseband processor and the central processing unit may be integrated into the processor 1711 in FIG. 17. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1712 may exist independently, and is connected to the processor 1711. Optionally, the memory 1712 may be integrated with the processor 1711, for example, integrated into one chip. The memory 1712 can store program code for executing the technical solutions in embodiments of this application, and the processor 1711 controls the execution. Various types of executed computer program code may also be considered as drivers of the processor 1711.

FIG. 17 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1713 may be configured to support receiving or sending of a radio frequency signal between the communication apparatus and a terminal, and the transceiver 1713 may be connected to the antenna 1715. The transceiver 1713 includes a transmitter Tx and a receiver Rx. Specifically, the one or more antennas 1715 may receive a radio frequency signal. The receiver Rx in the transceiver 1713 is configured to: receive the radio frequency signal from the antenna, convert the radio frequency signal into a digital baseband signal or a digital intermediate frequency signal, and provide the digital baseband signal or the digital intermediate frequency signal for the processor 1711, so that the processor 1711 further processes the digital baseband signal or the digital intermediate frequency signal, for example, performs demodulation processing and decoding processing. In addition, the transmitter Tx in transceiver 1713 is further configured to: receive a modulated digital baseband signal or digital intermediate frequency signal from the processor 1711, convert the modulated digital baseband signal or digital intermediate frequency signal into a radio frequency signal, and send the radio frequency signal through the one or more antennas 1715. Specifically, the receiver Rx may selectively perform one-level or multi-level down-conversion mixing processing and analog-to-digital conversion processing on the radio frequency signal, to obtain the digital baseband signal or the digital intermediate frequency signal. A sequence of the down-conversion mixing processing and the analog-to-digital conversion processing may be adjusted. The transmitter Tx may selectively perform one-level or multi-level up frequency mixing processing and digital-to-analog conversion processing on the modulated digital baseband signal or digital intermediate frequency signal, to obtain the radio frequency signal. A sequence of the up frequency mixing processing and the digital-to-analog conversion processing may be adjusted. The digital baseband signal and the digital intermediate frequency signal may be collectively referred to as a digital signal.

The transceiver 1713 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver machine, an input port, a receiving circuit, or the like. The sending unit may be referred to as a transmitter machine, a transmitter, a transmission circuit, or the like.

It should be noted that the communication apparatus 1700 shown in FIG. 17 may be specifically configured to implement steps implemented by the network device in the foregoing method embodiments, and implement technical effects corresponding to the network device. For specific implementations of the communication apparatus 1700 shown in FIG. 17, refer to the descriptions in the foregoing method embodiments. Details are not described herein again.

An embodiment of this application further provides a computer-readable storage medium storing one or more computer-executable instructions. When the computer-executable instruction is executed by a processor, the processor performs the method in the possible implementations of the terminal device in the foregoing embodiments.

An embodiment of this application further provides a computer-readable storage medium storing one or more computer-executable instructions. When the computer-executable instruction is executed by a processor, the processor performs the method in the possible implementations of the network device in the foregoing embodiments.

An embodiment of this application further provides a computer program product (or referred to as a computer program) storing one or more computers. When the computer program product is executed by a processor, the processor performs the method in the possible implementations of the foregoing terminal device.

An embodiment of this application further provides a computer program product storing one or more computers. When the computer program product is executed by a processor, the processor performs the method in the possible implementations of the foregoing network device.

An embodiment of this application further provides a chip system. The chip system includes at least one processor, configured to support a communication apparatus in implementing functions in the possible implementations of the foregoing communication apparatus. Optionally, the chip system further includes an interface circuit, and the interface circuit provides program instructions and/or data for the at least one processor. In a possible design, the chip system may further include a memory, and the memory is configured to store program instructions and data that are necessary for the communication apparatus. The chip system may include a chip, or may include a chip and another discrete component. The communication apparatus may be specifically the terminal device in the foregoing method embodiments.

An embodiment of this application further provides a chip system. The chip system includes at least one processor, configured to support a communication apparatus in implementing functions in the possible implementations of the foregoing communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the network device in the foregoing method embodiments.

An embodiment of this application further provides a communication system. A network system architecture includes the terminal device and the network device in any one of the foregoing embodiments.

In the several embodiments provided in this application, it should be understood that the disclosed systems, apparatuses, and methods may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. All or a part of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or a part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A communication method, comprising:
obtaining, by a terminal device, first information, wherein the first information is used to determine an access range corresponding to a first signal; and
if the terminal device is located in the access range after a first moment, sending, by the terminal device, a first random access preamble, wherein the first random access preamble is associated with the first signal.

2. The method according to claim 1, wherein the first information comprises at least one of the following:
location information of the access range, movement information of the access range, a duration threshold between the first moment and a sending moment of the first information, a duration threshold between the first moment and a receiving moment of the first information, or the first moment.

3. The method according to claim 1, wherein the first information comprises identification information of a second signal, and a coverage area of the first signal overlaps a coverage area of the second signal; and
if it is detected that signal quality of the second signal is greater than a first threshold, it is determined that the terminal device is located in the access range after the first moment.

4. The method according to any one of claims 1 to 3, wherein the first information comprises identification information of a third signal, and the coverage area of the first signal does not overlap a coverage area of the third signal; and
if it is detected that signal quality of the third signal is less than a second threshold, it is determined that the terminal device is located in the access range after the first moment.

5. The method according to any one of claims 1 to 4, wherein the first information comprises the identification information of the second signal and the identification information of the third signal, the coverage area of the first signal overlaps the coverage area of the second signal, and the coverage area of the third signal does not overlap the coverage area of the first signal; and
if it is detected that the signal quality of the second signal is less than a third threshold and the signal quality of the third signal is less than a fourth threshold, it is determined that the terminal device is located in the access range after the first moment.

6. The method according to any one of claims 1 to 5, wherein the first random access preamble comprises a random access preamble corresponding to the first signal.

7. The method according to claim 6, wherein before the sending, by the terminal device, a first random access preamble, the method further comprises:
receiving, by the terminal device, first indication information, wherein the first indication information indicates that the access range corresponding to the first signal comprises at least two sub-ranges; and
determining, by the terminal device based on the first indication information, that the terminal device is located in a target sub-range in the at least two sub-ranges.

8. A communication method, comprising:
generating, by a network device, first information, wherein the first information is used to determine an access range corresponding to a first signal;
sending, by the network device, the first information; and
if a terminal device is located in the access range after a first moment, receiving, by the network device, a first random access preamble, wherein the first random access preamble is associated with the first signal.

9. The method according to claim 8, wherein the first information comprises at least one of the following:
location information of the access range, movement information of the access range, a duration threshold between the first moment and a sending moment of the first information, a duration threshold between the first moment and a receiving moment of the first information, or the first moment.

10. The method according to claim 8 or 9, wherein the first information comprises identification information of a second signal, and a coverage area of the first signal overlaps a coverage area of the second signal.

11. The method according to any one of claims 8 to 10, wherein the first information comprises identification information of a third signal, and the coverage area of the first signal does not overlap a coverage area of the third signal.

12. The method according to any one of claims 8 to 11, wherein the first random access preamble comprises a random access preamble corresponding to the first signal.

13. The method according to claim 12, wherein the method further comprises:
sending, by the network device, first indication information, wherein the first indication information indicates that the access range corresponding to the first signal comprises at least two sub-ranges.

14. The method according to claim 8 or 13, wherein
different sub-ranges in the at least two sub-ranges correspond to different random access preamble configuration information, and the first random access preamble is configured based on random access preamble configuration information corresponding to a target sub-range; or
different sub-ranges in the at least two sub-ranges correspond to different resource information, and resource information carrying the first random access preamble corresponds to a target sub-range.

15. The method according to any one of claims 1 to 14, wherein the first information is located in a system information block.

16. A communication apparatus, comprising a processing unit and a transceiver unit, wherein
the transceiver unit is configured to obtain first information, wherein the first information is used to determine an access range corresponding to a first signal; and
if the processing unit determines that the communication apparatus is located in the access range after a first moment, the transceiver unit sends a first random access preamble, wherein the first random access preamble is associated with the first signal.

17. The apparatus according to claim 16, wherein the first information comprises at least one of the following:
location information of the access range, movement information of the access range, a duration threshold between the first moment and a sending moment of the first information, a duration threshold between the first moment and a receiving moment of the first information, or the first moment.

18. The apparatus according to claim 16, wherein the first information comprises identification information of a second signal, and a coverage area of the first signal overlaps a coverage area of the second signal; and
if it is detected that signal quality of the second signal is greater than a first threshold, the processing unit determines that the communication apparatus is located in the access range after the first moment.

19. The apparatus according to any one of claims 16 to 18, wherein the first information comprises identification information of a third signal, and the coverage area of the first signal does not overlap a coverage area of the third signal; and
if it is detected that signal quality of the third signal is less than a second threshold, the processing unit determines that the communication apparatus is located in the access range after the first moment.

20. The apparatus according to any one of claims 16 to 19, wherein the first information comprises the identification information of the second signal and the identification information of the third signal, the coverage area of the first signal overlaps the coverage area of the second signal, and the coverage area of the third signal does not overlap the coverage area of the first signal; and
if it is detected that the signal quality of the second signal is less than a third threshold and the signal quality of the third signal is less than a fourth threshold, the processing unit determines that the communication apparatus is located in the access range after the first moment.

21. The apparatus according to any one of claims 16 to 20, wherein the first random access preamble comprises a random access preamble corresponding to the first signal.

22. The apparatus according to claim 21, wherein
the receiving unit is further configured to receive first indication information, wherein the first indication information indicates that the access range corresponding to the first signal comprises at least two sub-ranges; and
the processing unit is further configured to determine, based on the first indication information, that the communication apparatus is located in a target sub-range in the at least two sub-ranges.

23. A communication apparatus, comprising a processing unit and a transceiver unit, wherein
the processing unit is configured to generate first information, wherein the first information is used to determine an access range corresponding to a first signal;
the transceiver unit is configured to send the first information; and
if the communication apparatus is located in the access range after a first moment, the transceiver unit is further configured to receive a first random access preamble, wherein the first random access preamble is associated with the first signal.

24. The apparatus according to claim 23, wherein the first information comprises at least one of the following:
location information of the access range, movement information of the access range, a duration threshold between the first moment and a sending moment of the first information, a duration threshold between the first moment and a receiving moment of the first information, or the first moment.

25. The apparatus according to claim 23, wherein the first information comprises identification information of a second signal, and a coverage area of the first signal overlaps a coverage area of the second signal.

26. The apparatus according to any one of claims 23 to 25, wherein the first information comprises identification information of a third signal, and the coverage area of the first signal does not overlap a coverage area of the third signal.

27. The apparatus according to any one of claims 23 to 26, wherein the first random access preamble comprises a random access preamble corresponding to the first signal.

28. The apparatus according to claim 27, wherein
the transceiver unit is further configured to send first indication information, wherein the first indication information indicates that the access range corresponding to the first signal comprises at least two sub-ranges.

29. The apparatus according to claim 22 or 28, wherein
different sub-ranges in the at least two sub-ranges correspond to different random access preamble configuration information, and the first random access preamble is configured based on random access preamble configuration information corresponding to the target sub-range; or
different sub-ranges in the at least two sub-ranges correspond to different time-frequency resources, and a time-frequency resource carrying the first random access preamble corresponds to the target sub-range.

30. The apparatus according to any one of claims 16 to 29, wherein the first information is located in a system information block.

31. A communication method, comprising:
receiving, by a terminal device, second information, wherein the second information comprises priorities of n signals, and n is an integer greater than 1; and
sending, by the terminal device, a random access preamble corresponding to a signal with a highest priority in the n signals.

32. The method according to claim 31, wherein the sending, by the terminal device, a random access preamble corresponding to a signal with a highest priority in the n signals comprises:
if the terminal device detects that signal quality of the n signals is greater than a threshold, sending, by the terminal device, the random access preamble corresponding to the signal with the highest priority in the n signals.

33. A communication method, comprising:
generating, by a network device, second information, wherein the second information comprises priorities of n signals, and n is an integer greater than 1; and
sending, by the network device, the second information.

34. The method according to claim 33, wherein the generating, by a network device, second information comprises:
generating, by the network device, the second information based on movement information of the network device.

35. The method according to any one of claims 31 to 34, wherein the n signals comprise a first signal; and
the priorities of the n signals comprise relative priorities of (n-1) signals in the n signals to the first signal.

36. A communication method, comprising:
receiving, by a terminal device, first indication information, wherein the first indication information indicates at least two sub-ranges in an access range corresponding to a first signal; and
sending, by the terminal device, a first random access preamble, wherein different sub-ranges in the at least two sub-ranges correspond to different random access preamble configuration information, and the first random access preamble is configured based on random access preamble configuration information corresponding to the target sub-range; or different sub-ranges in the at least two sub-ranges correspond to different resource information, and resource information carrying the first random access preamble corresponds to the target sub-range.

37. A communication method, comprising:
sending, by a network device, first indication information, wherein the first indication information indicates at least two sub-ranges in an access range corresponding to a first signal; and
receiving, by the network device, a first random access preamble, wherein different sub-ranges in the at least two sub-ranges correspond to different random access preamble configuration information, and the first random access preamble is configured based on random access preamble configuration information corresponding to the target sub-range; or different sub-ranges in the at least two sub-ranges correspond to different resource information, and resource information carrying the first random access preamble correspond to the target sub-range.

38. The method according to claim 36 or 37, wherein the resource information comprises time domain resource information and/or frequency domain resource information.

39. A communication apparatus, comprising a processing unit and a transceiver unit, wherein
the transceiver unit is configured to receive second information, wherein the second information comprises priorities of n signals, and n is an integer greater than 1;
the processing unit is configured to determine a random access preamble corresponding to a signal with a highest priority in the n signals; and
the transceiver unit is further configured to send the random access preamble corresponding to the signal with the highest priority in the n signals.

40. The apparatus according to claim 39, wherein the transceiver unit is specifically configured to: if the processing unit detects that signal quality of the n signals is greater than a threshold, send the random access preamble corresponding to the signal with the highest priority in the n signals.

41. A communication apparatus, comprising a processing unit and a transceiver unit, wherein
the processing unit is configured to generate second information, wherein the second information comprises priorities of n signals, and n is an integer greater than 1; and
the transceiver unit is configured to send the second information.

42. The apparatus according to claim 41, wherein the processing unit is specifically configured to generate the second information based on movement information of a network device.

43. The apparatus according to any one of claims 39 to 42, wherein the n signals comprise a first signal; and
the priorities of the n signals comprise relative priorities of (n-1) signals in the n signals to the first signal.

44. A communication apparatus, comprising a transceiver unit and a processing unit, wherein
the transceiver unit is configured to receive first indication information, wherein the first indication information indicates at least two sub-ranges in an access range corresponding to a first signal;
the processing unit is configured to determine a first random access preamble, wherein different sub-ranges in the at least two sub-ranges correspond to different random access preamble configuration information, and the first random access preamble is configured based on random access preamble configuration information corresponding to the target sub-range; or different sub-ranges in the at least two sub-ranges correspond to different resource information, and resource information carrying the first random access preamble corresponds to the target sub-range; and
the transceiver unit is further configured to send the first random access preamble.

45. A communication apparatus, comprising a transceiver unit and a processing unit, wherein
the processing unit is configured to determine first indication information, wherein the first indication information indicates at least two sub-ranges in an access range corresponding to a first signal;
the transceiver unit is configured to send the first indication information; and
the transceiver unit is further configured to receive a first random access preamble, wherein different sub-ranges in the at least two sub-ranges correspond to different random access preamble configuration information, and the first random access preamble is configured based on random access preamble configuration information corresponding to the target sub-range; or different sub-ranges in the at least two sub-ranges correspond to different resource information, and resource information carrying the first random access preamble corresponds to the target sub-range.

46. The apparatus according to claim 44 or 45, wherein the resource information comprises time domain resource information and/or frequency domain resource information.

47. A communication apparatus, comprising at least one processor, coupled to a memory, wherein
the memory is configured to store a program or instructions; and
the at least one processor is configured to execute the program or the instructions, to enable the apparatus to implement the method according to any one of claims 1 to 7, or 8 to 15, or 31 to 38.

48. A communication apparatus, comprising at least one logic circuit and an input/output interface, wherein
the input/output interface is configured to input and/or output signals; and
the logic circuit is configured to perform the method according to any one of claims 1 to 15 or 31 to 38.

49. A computer-readable storage medium, wherein the medium stores instructions, and when the instructions are executed by a computer, the method according to any one of claims 1 to 15 or 31 to 38 is implemented.

50. A computer program product, comprising instructions, wherein when the instructions are run on a computer, the computer is enabled to perform the method according to any one of claims 1 to 15 or 31 to 38.

51. A communication system, comprising:
the communication apparatus according to any one of claims 16 to 22, and the communication apparatus according to any one of claims 23 to 30;
the communication apparatus according to either one of claims 39 and 40 and the communication apparatus according to any one of claims 41 to 43; or
the communication apparatus according to claim 44 and the communication apparatus according to claim 45.
